(19) Europäisches Patentamt
European Patent Office
Office européen des brevets

(11) **EP 2 390 948 A2**

(12) **EUROPEAN PATENT APPLICATION**
published in accordance with Art. 153(4) EPC

(43) Date of publication:
**30.11.2011 Bulletin 2011/48**

(51) Int Cl.:
*H01M 4/58* (2010.01)  *H01M 4/04* (2006.01)
*H01M 10/05* (2010.01)  *H01M 8/10* (2006.01)

(21) Application number: **10733657.0**

(22) Date of filing: **21.01.2010**

(86) International application number:
**PCT/KR2010/000401**

(87) International publication number:
**WO 2010/085104 (29.07.2010 Gazette 2010/30)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **22.01.2009 KR 20090005540**

(71) Applicant: **Hanwha Chemical Corporation Seoul 100-797 (KR)**

(72) Inventors:
• **SONG, Kyu Ho**
  **Daejeon 302-777 (KR)**
• **HAN, Soo Yeong**
  **Daejeon 305-308 (KR)**
• **NAM, Ho Seong**
  **Daejeon 305-720 (KR)**
• **BANG, Eui Yong**
  **Daejeon 305-720 (KR)**
• **OH, Se Jin**
  **Daejeon 305-509 (KR)**
• **BAEK, In Jae**
  **Daejeon 302-754 (KR)**
• **KIM, So Yeon**
  **Seoul 133-751 (KR)**
• **HAN, Kyoo Seung**
  **Busan 614-847 (KR)**

(74) Representative: **Lippich, Wolfgang**
  **Samson & Partner**
  **Patentanwälte**
  **Widenmayerstrasse 5**
  **80538 München (DE)**

(54) **ELECTRODE ACTIVE MATERIAL FOR ANION-DEFICIENT LITHIUM TRANSITION METAL PHOSPHATE COMPOUND, METHOD OF PREPARING SAME, AND ELECTROCHEMICAL DEVICE USING SAME**

(57) The invention provides an anion-deficient lithium transition-metal phosphate as an electrode-active material, which is represented by the chemical formula $Li_{1-x}M(PO_4)_{1-y}$ ($0 \leq x \leq 0.15$, $0 < y \leq 0.05$). The invention provides a method for preparing said $Li_{1-x}M(PO_4)_{1-y}$, which comprises preparing a precursor of lithium transition-metal phosphate; mixing said precursor with water under reaction conditions of $200 \sim 700°C$ and $180 \sim 550$bar to produce an anion-deficient lithium transition-metal phosphate; and calcining, or granulating and calcining the resultant compound. The invention also provides electrochemical devices employing said $Li_{1-x}M(PO_4)_{1-y}$ as an electrode-active material.

Figure 22

EP 2 390 948 A2

## Description

### [Technical Field]

This invention relates to an anion-deficient lithium transition-metal phosphate as an electrode-active material, method for preparing the same, and electrochemical device using the same.

### [Background Art]

Lithium secondary batteries have advantages of light weight and high capacity as compared with other secondary batteries such as nickel-cadmium batteries (Ni//Cd) and nickel-metal hydride batteries (Ni//MH). Accordingly, lithium secondary batteries are used as power sources of electronic instruments and appliances such as mobile phones, laptop computers, game devices, and wireless cleaners. Recently, their application field has been broadening to high-capacity batteries for electric bicycles, electric scooters, service robots, electric cars, and electricity storage devices for power plants.

Lithium secondary batteries have generally been made by employing lithium cobaltate ($LiCoO_2$ as a cathode-active material, carbon as an anode-active material, and lithium hexafluorophosphate ($LiPF_6$) as an electrolyte. However, cobalt as the main component of lithium cobaltate ($LiCoO_2$ suffers from unstable supply and demand, and its cost is high. Thus, it is economically unfeasible to apply cobalt to large-size lithium secondary batteries which require a large amount of cobalt. Accordingly, other materials, such as lithium manganate ($LiMn_2O_4$) of spinel structure, where cobalt is substituted by other transition metals of low cost, have began to be commercially used, and lithium transition metal polyanion compounds represented by lithium iron phosphate ($LiFePO_4$) of olivine structure are also undergoing commercialization.

Lithium transition-metal phosphates of olivine structure have a stable crystal structure, are highly stable to chemical reactions, and have advantages of high capacity, long life, and low cost. Nevertheless, their commercialization has not progressed easily due to low electron conductivity, low ion conductivity, and by-products formed from side reactions. Especially, the composition and crystal structure of lithium transition-metal phosphate are prone to change depending on its preparation method. Thus, it is difficult to prepare a desired composition and crystal structure, or to prepare fine particles having a uniform composition and crystal structure, or to prevent the generation of a compound containing impurities having an undesired oxidation state. These problems of the conventional technology deteriorate the characteristics of the material and batteries, resulting in low productivity, low reliability, and low cost-effectiveness and have been posing an obstacle to the commercialization of lithium transition-metal phosphates.

For example, in the case of lithium manganese phosphate ($LiMnPO_4$), impurities such as $Mn_3O_4$, $Mn_2O_3$, $MnO_2$ MnP, and $Mn_3(PO_4)_4$ are additionally generated. Most of the manganese in the impurities has an oxidation state exceeding 2, because manganese electrostructurally tends to have an oxidation state of +3 or greater, and manganese can be easily oxidized in the course of production and application. A lithium manganese phosphate containing manganese ions of a +3 oxidation state or greater does not have a perfect olivine structure but contains impurities. Since most impurities are not electrochemically active, a lithium manganese phosphate containing manganese of an oxidation state of +3 or greater is inferior to a lithium manganese phosphate containing only manganese of a +2 oxidation state in characteristics as a battery material. Therefore, efforts have been made to prevent the formation of manganese of an oxidation state of +3 or greater.

The present invention provides anion-deficient lithium transition-metal phosphates in order to overcome the problems of conventional technology. Korean Patent Application No. 2009-0005540 discloses anion-deficient lithium iron phosphate represented by $Lh_{1-x}Fe(PO_4)_{1-y}$ and its preparation method. However, the compound of the present invention is different from that of said Korean patent application in that the former essentially contains at least one element selected from the group consisting of the Group 2 and Group 13 elements of the periodic table, Sc, Ti, V, Cr, Mn, Co, Ni, Cu, Zn, Y, Zr, Nb, and Mo.

Although some non-stoichiometric lithium transition-metal phosphates are referred to in published literature, they are different from the compound of the present invention in that they are not anion-deficient compounds but cation-excessive or cation-deficient compounds.

For example, EP-A-1,094,532 describes a method for preparing a compound of the formula $Li_xMyPO_4$, in which x is greater than 0 and less than or equal to 2, y is greater than or equal to 0.8 and less than or equal to 1.2, and M includes at least one metal having 3d orbitals.

EP-A-1,094,533 and Korean Patent Application Laying-open No. 2001-0025117 describe a compound represented by the formula $Li_xM_yPO_4$, in which x is greater than 0 and less than or equal to 2, and y is greater than or equal to 0.8 and less than or equal to 1.2, with M containing a 3d transition state, and the grains of $Li_xM_yPO_4$ are no greater in size than 10 micrometers.

U.S. Patent Application Publication No. 2006/0263286A1 and Japanese Patent Application Laying-open No.

2006-131485 disclose a preparation method of olivine $Li_{1+x}Fe_{1+y}PO_4$, wherein $-0.2 \leq x \leq 0.2$ and $-0.2 \leq y \leq 0.2$.

U.S. Patent Application Publication No. 2007/0207080A1 discloses a method for preparing a $Li_xM_yPO_4$ compound having an olivine structure. The method includes: preparing a solution containing transition metal M ions, $Li^+$ ions and $PO_4^{3-}$ ions; drying the solution to form particles of a starting material; and forming the particles of the starting material into particles of the $Li_xM_yPO_4$ compound with an olivine structure, in which $0.8 \leq x \leq 1.2$ and $0.8 \leq y \leq 1.2$, and coating the particles of the $Li_xM_yPO_4$ compound with a carbon layer thereon.

PCT Publication No. WO 2003/077335 and Korean Patent Application Laying-open No. 2004-0094762 disclose an electrode-active material having the formula $A_{a+x}M_bP_{1-x}Si_xO_4$, wherein A is selected from the group consisting of Li, Na, K, and mixtures thereof, and $0 < a < 1.0$ and $0 \leq x \leq 1$; M comprises one or more metals, comprising at least one metal which is capable of undergoing oxidation to a higher valence state, where $0 < b \leq 2$; and wherein M, a, b, and x are selected so as to maintain electroneutrality of said compound.

However, the lithium compounds referred to in the above literature are cation-deficient or cation-excessive compounds where the molar ratio of the anion $PO_4^{3-}$ is fixed at 1 and the molar ratio of the cation M varies as in $Li_xM_yPO_4$, and thus they are different from the anion-deficient non-stoichiometric lithium transition-metal phosphates of the present invention and cannot fundamentally solve the problems of the conventional technology.

In this connection, speaking of the types of non-stoichiometric lithium transition-metal phosphates, a ceramic material such as lithium transition-metal phosphate is an ionic compound which comprises a cation ($M^{y+}$) and an anion ($X^{y-}$), and non-stoichiometric ionic compounds may have four types of point defects, as follows:

The first type is a cation-excessive non-stoichiometric compound represented by $M_{1+z}X$. In this formula, the molar ratio of the anion ($X^{y-}$) is 1, which means that all the lattice points of the anion are filled. The molar ratio $1+z$ of the cation $M^{y+}$ means that all cation lattice points are filled and, in addition, the excessive $z$ mol of the cation $M^{y+}$ is positioned at interstitial sites between lattice points. This type of point defect is called an interstitial cation defect. Here, if 1 mol of $X^{y-}$ having a negative charge of $-y$ is present and $1+z$ mol of the cation $M^{y+}$ having a positive charge of $+y$ is present in excess of 1 mol, electroneutrality is not satisfied. Accordingly, the oxidation number of the cation cannot be maintained at $+y$ but decreases to $+y'$ [$y' = y/(1+z)$] to maintain electroneutrality.

The second type is a cation-deficient non-stoichiometric compound represented by $M_{1-z}X$. In this formula, the molar ratio of the anion ($X^{y-}$) is 1, which means that all the lattice points of the anion are filled. The molar ratio $1-z$ of the cation $M^{y+}$ means that all cation lattice points are not filled but, instead, $z$ mol of the cation lattice points remain as vacancies. This type of point defect is a cation vacancy defect. If the anion $X^{y-}$ having a negative charge of $-y$ exists in an amount of 1 mol and positive ions having a positive charge of $+y$ exist in an amount of $1-z$ mol, which is less than 1 mol, electroneutrality is not satisfied. Accordingly, the oxidation number of the cation cannot be maintained at $+y$ but increases to $+y'$ [$y' = y/(1-z)$].

The third type is an anion-deficient non-stoichiometric compound represented by $MX_{1-z}$. In this formula, the molar ratio of the cation ($M^{y+}$) is 1, which means that all the lattice points of the cation are filled. The molar ratio $1-z$ of the anion $X^{y-}$ means that all anion lattice points are not filled but, instead, $z$ mol of the anion lattice points remain as vacancies. This type of point defect is an anion vacancy defect. If the cation $M^{y+}$ having a positive charge of $+y$ exists in an amount of 1 mol and the negative ions having the negative charge of $-y$ exist in an amount of $1-z$ mol, which is less than 1 mol, electroneutrality is not satisfied. In ceramic material, cations are in general transition-metal cations and the oxidation number of a transition metal may vary in certain ranges but the oxidation number of an anion is hard to change. Accordingly, the oxidation number of the cation cannot be maintained at $+y$ but reduces to $+y'$ [$y' = y(1-z)$].

The fourth type is an anion-excessive non-stoichiometric compound represented by $MX_{1+z}$. In this formula, the molar ratio of the cation ($M^{y+}$) is 1, which means that all the lattice points of the cation are filled. The molar ratio $1+z$ of the anion $X^{y-}$ means that all anion lattice points are filled and, in addition, the excessive $z$ mol of the anions are positioned at interstitial sites between lattice points. This type of point defect is an interstitial anion defect. If the cation $M^{y+}$ having a positive charge of $+y$ is present in an amount of 1 mol and the negative ions having the negative charge of $-y$ are present in an amount of $1+z$ mol, which is greater than 1 mol, electroneutrality is not satisfied. Accordingly, the oxidation number of the cation cannot be maintained at $+y$ but increases to $+y'$ [$y' = y(1+z)$].

**[Disclosure]**

**[Technical Problem]**

The object of the present invention is to provide an anion-deficient lithium transition-metal phosphate, which shows high ion conductivity, contains a decreased amount of impurities which are not electrochemically active, and has improved characteristics as an electro-active material. The present invention is also to provide a method for preparing an anion-deficient lithium transition-metal phosphate, and electrochemical device using the same.

**[Technical Solution]**

The present invention is based on the surprising and unexpected discovery that the electrochemical utility and performance of a lithium transition-metal phosphate can be strikingly improved by controlling the amount and distribution of anion vacancies.

A compound of the present invention is an anion-deficient lithium iron phosphate represented by the following chemical formula 1:

$$Li_{1-x}M(PO_4)_{1-y} \quad (1)$$

wherein $0 \leq x \leq 0.15$, $0 < y \leq 0.05$, and M is represented by the following formula 2

$$M^A_a M^B_b M^T_t Fe_{1-(a+b+t)} \quad (2)$$

wherein $M^A$ is at least one element selected from the group consisting of the Group 2 elements of the periodic table, $M^B$ is at least one element selected from the group consisting of Group 13 elements of the periodic table, $M^T$ is at least one element selected from the group consisting of Sc, Ti, V, Cr, Mn, Co, Ni, Cu, Zn, Y, Zr, Nb, and Mo, and wherein $0 \leq a < 1$, $0 \leq b < 0.575$, $0 \leq t \leq 1$, $0 \leq (a+b) < 1$, and $0 < (a+b+t) \leq 1$.

Further, the invention provides a method for preparing an anion-deficient lithium transition-metal phosphate comprising: preparing a precursor of lithium transition-metal phosphate; mixing said precursor with water under reaction conditions of 200 ~ 700°C and 180 ~ 550bar to produce an anion-deficient lithium transition-metal phosphate; and calcining, or granulating and calcining the resultant compound.

**[Advantageous Effects]**

In general, lithium transition-metal phosphates produced by conventional methods have fundamental drawbacks of low electron conductivity, i.e., low lithium ion diffusion rates. Further, because the oxidation states of transition metals are hard to control in the course of preparation and application, impurities which are not electrochemically active are easily formed. In the lithium transition-metal phosphates of the present invention, such drawbacks are fundamentally resolved by anion vacancies generated due to the shortage of anions.

If anion vacancies are formed, the diffusion routes of lithium ions are enlarged and the repulsive force between lithium ions in the vicinity of vacancies and transition metal cations promotes lithium ion diffusion during the deintercalation of lithium ions, resulting in increasing the lithium diffusion rate and ion conductivity. As the lithium diffusion rate increases, the concentration gradient of lithium ions from the surface to the center of a particle becomes relatively gentle, the resistance caused by concentration polarization is decreased, and output characteristics are increased, leading to improved properties of the electrode material.

Further, as a lithium transition-metal phosphate of the present invention runs short of anions, in order to satisfy electroneutrality, the oxidation number of metal cations decreases. Accordingly, the anion vacancies in the crystal improve the properties of electrode-active material by suppressing the generation of impurities of low electrochemical activity caused by oxidation of transition metals.

As a result, an anion-deficient non-stoichiometric lithium transition-metal phosphate of the present invention, as compared with conventional lithium transition-metal phosphates, has high ion conductivity and chemical stability, provides improved output, high capacity, and long life for electrochemical devices such as secondary batteries. Further, a method of the present invention, as compared with conventional methods, provides an easy way to produce an anion-deficient non-stoichiometric lithium transition-metal phosphate, and realizes high productivity, high reliability, and high cost-effectiveness.

**[Description of Drawings]**

Figure 1 is a SEM photograph of 1,000 times magnification of the anion-deficient lithium transition-metal phosphate particles which were synthesized, granulated and calcined in Example 1.

Figure 2 is a SEM photograph of a granule of Figure 1 at a magnification of 50,000 times and shows nanometer-size ultrafine particles which constitute the granule.)

Figures 3, 4, 5, 6, 7, 8, 9, and 10 show the results of Rietveld refinement of X-ray diffraction patterns obtained from the compounds synthesized in Examples 1, 4, 5, 8, 9, 12, 13 and 14, respectively.

Figure 11 depicts plots (a) to (u) which are X-ray diffraction patterns of the compounds of Examples 1 to 21, respectively.

Figures 12, 13, 14, 15, and 16 compare the impedance of the lithium transition-metal phosphates synthesized in Example 1 and Comparative Example 1 (Figure 12), Example 5 and Comparative Example 5 (Figure 13), Example 9 and Comparative Example 9 (Figure 14), Example 13 and Comparative Example 13 (Figure 15), and Example 14 and Comparative Example 14 (Figure 16).

Figures 17, 18, 19, 20, and 21 show lithium chemical diffusion coefficients measured with the GITT (Galvanostatic Intermittent Titration Technique) method at various charge/discharge conditions for the lithium transition-metal phosphates synthesized in Example 1 and Comparative Example 1 (Figure 17), Example 5 and Comparative Example 5 (Figure 18), Example 9 and Comparative Example 9 (Figure 19), Example 13 and Comparative Example 13 (Figure 20), and Example 14 and Comparative Example 14 (Figure 21).

Figure 22 shows the relationship between the molar ratios of phosphorus to the metal M (P/M) and the lithium diffusion coefficients measured on the lithium manganese cobalt nickel iron phosphates synthesized in Examples 14, 18, 19, 20 and 21 and Comparative Examples 14 and 15.

Figures 23, 24, and 25 are the charge/discharge graphs of lithium secondary batteries adopting the anion-deficient lithium manganese iron phosphates synthesized in Examples 1, 2, and 3 as cathode-active materials.

Figure 26 compares the charge/discharge graphs of lithium secondary batteries which adopt the lithium manganese iron phosphates synthesized in Example 2 (graph (a)) and Comparative Example 2 (graph (b)) as cathode-active materials.

**[Mode for Invention]**

A compound of the present invention represented by $Li_{1-x}M(PO_4)_{1-y}$ ($0 \leq x \leq 0.15$, $0 < y \leq 0.05$) is anion-deficient lithium transition-metal phosphate, wherein the molar ratio of the cation M is 1 and the molar ratio of the anion $PO_4$ is less than 1. The present compound is compositionally and structurally distinct from the conventional lithium transition-metal phosphates.

In chemical formula 1, the molar ratio of the lithium ions means the ratio of the lithium ions which are constituents of the anion-deficient lithium transition-metal phosphate. In reality, when preparing a lithium transition-metal phosphate as an electrode-active material, in order to compensate for lithium which volatilizes during calcination or in order to maximize the discharging capacity of a lithium secondary battery, an excessive amount of a lithium precursor is introduced as a reactant. Accordingly, the molar ratio of lithium in a synthesized lithium iron phosphate may be greater than that in the above chemical formula. However, lithium introduced for the above purposes does not exist in the anion-deficient lithium transition-metal phosphate of the present invention but is present as an impurity having electrochemical activity. A representative example of such lithium ions is those existing in the form of a surface defect on a crystal.

In chemical formula 1, y corresponds to the amount of anion vacancies. In order to maintain electroneutrality when anion vacancies are generated, the average oxidation number of M should decrease or the amount of lithium ions of a +1 oxidation state should decrease. For example, in a stoichiometric lithium transition-metal phosphate $LiMPO_4$, if anion $PO_4$ vacancies are generated without change in the average oxidation number of M, the amount of Li should decrease by three times the amount of decrease of $PO_4$ in order to maintain electroneutrality.

As above, the formation of vacancies of the anion $PO_4$ and vacancies of the cation Li in the amount of three times the $PO_4$ vacancies is called a Schottky defect, which is a typical mechanism of forming vacancies. According to this mechanism, the relation of x=3y is maintained and thus if $0 < y \leq 0.05$, then $0 < x \leq 0.15$. In contrast, in the anion-deficient lithium transition-metal phosphates of the present invention, the oxidation number of M may change, and thus x and y may independently change without satisfying the relation of x=3y. That is, regardless of the range of y, x may be less than 0 or greater than 0.15. For example, x may be $-1 < x < 1$. However, if structural and chemical stability and electrochemical activity in the course of preparation and application are taken into account, a preferred range of x is $0 \leq x \leq 0.15$.

In chemical formula 1, the value of y, which indicates the amount of anion vacancies, is $0 < y \leq 0.05$. If $y \leq 0$, the compound is not anion-deficient, and if $y > 0.05$, the structure of the compound is unstable and electrochemical activity deteriorates. Preferably the value of y is $0.01 \leq y \leq 0.05$, more preferably $0.02 \leq y \leq 0.05$, and most preferably $0.03 \leq y \leq 0.05$.

In chemical formula 2, $M^A$ has a +2 oxidation state, and $M^B$ has a +3 oxidation state. In contrast, Fe generally has an oxidation state of +2 or +3, and $M^T$ may have various oxidation states of +1 to +7. Accordingly, according to the amounts of $M^A$, $M^B$, $M^T$, and Fe, the oxidation numbers of $M^T$ and Fe change so that electroneutrality is maintained.

If the average oxidation number of cations having different oxidation numbers is denoted as v, when $0 \leq x \leq 0.15$ and $0 < y \leq 0.05$, the average oxidation number v is $1.85 \leq v \leq 2.15$. If $0.01 \leq y \leq 0.05$, then $1.85 \leq v \leq 2.12$. Further, if $0.02 \leq y \leq 0.05$, then $1.85 \leq v \leq 2.09$, and if $0.03 \leq y \leq 0.05$, then $1.85 \leq v \leq 2.06$. If the average oxidation number of $M^T$ is denoted as $v^T$, and the average oxidation number of Fe is $v^F$, v is expressed by the following equation 1, and the range of v, which is limited by the requirement for electroneutrality, limits the amounts of $M^A$, $M^B$, $M^T$, and Fe and the oxidation numbers of $M^T$ and Fe.

$$v=2a+3b+v^T t+v^F\{1-(a+b+t)\} \quad (1)$$

If all Fe have a +2 oxidation state, then $v^F=2$ and v can be simply expressed by the following equation 2 (In equation 1, as the average oxidation number $v^T$ of $M^T$ approaches +1, the possibility of the occurrence of $Fe^{+3}$ becomes high. If $Fe^{+3}$ exists, equation 2 cannot be used):

$$v=b+(v^T-2)t+2 \quad (2)$$

The Group 2 elements which constitute $M^A$ increase the stability of the crystal structure and help improve chemical stability and life. Preferably, $M^A$ is at least one selected from Mg and Ca, more preferably, it is Mg. Since $M^A$ has a +2 oxidation state, the compound can have a stable structure when $0 \leq a \leq 1$. However, if a is 1, the compound is of no use as electrode-active material because it has no electrochemical activity, and thus the range of a is limited to $0 \leq a < 1$. Also, the range of a is preferably $0 \leq a \leq 0.30$, and more preferably $0 \leq a \leq 0.15$.

The Group 13 elements which constitute $M^B$ lower the average oxidation number of the transition metal $M^T$, prevent oxidation, improve electrochemical activity, and suppress the generation of impurities. Preferably, $M^B$ is at least one selected from B, Al, and Ga, and more preferably it is Al. Since $M^B$ has a +3 oxidation state, it cannot be doped beyond a certain degree. In chemical formulas 1 and 2, the greatest amount of $M^B$ can be dissolved when the average oxidation number of $M^T$ is +1, and in this case, when $0 \leq x \leq 0.15$ and $0 < y \leq 0.05$, the upper limit of b, which denotes the amount of $M^B$, is 0.575. The range of b is preferably $0 \leq b \leq 0.20$ and more preferably $0 \leq b \leq 0.10$.

$M^T$ is at least one element selected from Sc, Ti, V, Cr, Mn, Co, Ni, Cu, Zn, Y, Zr, Nb and Mo, which are the elements of periods 4 and 5 of the periodic table excluding Fe. Transition metals have various oxidation numbers ranging from +1 to +7 and various electrochemical activities. Depending on which transition metals are employed, most of the fundamental properties of an electrode-active material (theoretical capacity and potential) are greatly affected. Accordingly, $M^T$ can be constituted in accordance with a required battery system. Preferably, $M^T$ is at least one element selected from Ti, V, Cr, Mn, Co, Ni, Cu, Zn, Zr, Nb, and Mo, and more preferably it is at least one element selected from Mn, Co, and Ni.

An anion-deficient lithium transition-metal phosphate of the present invention necessarily contains at least one element selected from the group consisting of Groups 2 and 13 elements, Sc, Ti, V, Cr, Mn, Co, Ni, Cu, Zn, Y, Zr, Nb and Mo.

An anion-deficient lithium transition-metal phosphate of chemical formula 1 is preferably crystalline. Here, depending on the array of the polyanion $PO_4$ having a tetragonal structure, compounds may have various crystal structures, but olivine structure is preferred.

An anion-deficient lithium transition-metal phosphate of the present invention can be used as an electrode-active material for secondary batteries, memory devices, and capacitors including hybrid capacitors (P-EDLC), and other electrochemical devices, preferably as a cathode-active material for secondary batteries.

An electrode can be made in conventional ways well-known in the art. For example, an electrode can be made by mixing an anion-deficient lithium transition-metal phosphate as a cathode-active material with a binder to prepare an electrode slurry, and coating the obtained electrode slurry on a current collector. In making such an electrode, a conducting agent can optionally be used.

The present invention provides an electrochemical device comprising (a) a cathode containing an anion-deficient lithium transition-metal phosphate, (b) an anode, (c) a separator, and (d) an electrolyte. An electrochemical device of the present invention can be made, for example, according to any conventional method known in the art, by interposing a porous separator between a cathode and an anode and adding an electrolyte. There is no limitation to an anode, an electrolyte, and a separator which are used together with a cathode of the present invention, and those conventionally used in electrochemical devices can be adopted.

The electrochemical devices provided by the present invention include all devices wherein an electrochemical reaction occurs, for example, various secondary batteries, memory devices, and capacitors including hybrid capacitors (P-EDDC). Preferred examples of the secondary batteries include lithium secondary batteries such as lithium metal secondary batteries, lithium ion secondary batteries, lithium ion polymer secondary batteries, and lithium metal polymer secondary batteries.

An anion-deficient lithium transition-metal phosphate of the present invention, as compared with conventional lithium transition-metal phosphates, shows high ion conductivity and good physical and chemical stability, and thereby it provides high capacity, high power, long life, and improved output characteristics for batteries adopting it, and enables the fabrication of a more homogeneous electrode plate, reducing the formation of defective batteries.

An anion-deficient lithium transition-metal phosphate of the present invention may be synthesized based on a hydrothermal synthesis method that uses supercritical or subcritical water, by controlling reaction variables, such as the mixing ratios of reactants, reaction temperature, and reaction pressure.

A method of the present invention requires only a few seconds at a high temperature and a high pressure for synthesizing an anion-deficient lithium transition-metal phosphate. Also, the present method does not require a separate process for mixing a lithium source at a calcination step and does not require heat treatment time for lithium ion diffusion, because the lithium transition-metal phosphate already contains lithium ions before the calcination step. Accordingly, time needed for synthesizing a final electrode-active material can be shortened.

Specially, in the case of lithium transition-metal phosphates, because electron conductivity and ion conductivity are low, the smaller the particle size, the more advantageous. Since a method of the present invention enables the production of ultrafine particles without requring a separate process for making the particles ultrafine, commercialization can be easily realized.

Further, since the crystalization of lithium transition-metal phosphate proceeds very rapidly in water under a supercritical or subcritical condition, if a phosphate having a greater solubility than the metal precursor is used, the phosphate takes part in the crystalization in a relatively smaller amount, resulting in the formation of more anion vacancies. Accordingly, a method of the present invention enables the easy preparation of anion-deficient lithium transition-metal phosphates.

Specifically, an anion-deficient lithium transition-metal phosphate of the present invention can be prepared according to a method comprising the following steps:

(a) mixing a precursor of the metal M, a phosphate compound, an alkalinizing agent, and a lithium precursor to prepare a precursor of lithium transition-metal phosphate;

(b) mixing the precursor of the lithium transition-metal phosphate of step (a) with water under reaction conditions of a temperature of 200 ~ 700 ˚C and a pressure of 180 ~ 550bar to produce anion-deficient lithium transition-metal phosphate, and drying the thus-synthesized compound; and

(c) subjecting the resultant compound of step (b) either to calcination or to granulation and subsequent calcination.

Hereinbelow is given a more detailed explanation of each step.

**Step (a):** Preparing a precursor of an anion-deficient lithium transition-metal phosphate by mixing a precursor of the metal M, a phosphate compound, an alkalinizing agent, and a lithium precursor

As a precursor of the metal M, any compound can be used as long as it is a salt containing the metal M of chemical formula 1 and can be ionized. Preferred ones are water-soluble compounds. Non-limiting examples of the metal M's precursors include nitrates, sulfates, acetates, carbonates, oxalates, halides, oxides, hydroxides, alkoxides, and combinations thereof which contain the metal M. Particularly, nitrates, sulfates, and acetates are preferred.

As a phosphate compound, any ionizable compound containing the phosphate group can be used. Preferred are water-soluble compounds. Non-limiting examples of the phosphate compounds include phosphoric acid, ammonium phosphate, hydrogen ammonium phosphate, lithium phosphate, phosphate containing at least one constituent of the metal M, and combinations thereof. Particularly, phosphoric acid is preferred.

Any alkalinizing agent can be used as long as it makes a reaction solution alkaline. Non-limiting examples of the alkalinizing agents are alkali metal hydroxides, alkaline earth metal hydroxides, ammonium hydroxide, ammonium compounds, TRAH (tetra-alkyl ammonium hydroxide) and mixtures thereof. Particularly, alkali metal hydroxides and ammonium hydroxide are preferred.

As a lithium precursor, any compound can be used as long as it is a water-soluble salt containing lithium and is ionizable. Non-limiting examples thereof include lithium hydroxide, lithium nitrate, lithium sulfate, lithium acetate, and mixtures thereof. Particularly, lithium hydroxide is preferred because it serves as a source of lithium and increases alkalinity.

In step (a), the molar ratio of Li to M, i.e., Li/M, is preferably 1.0 to 20, and more preferably 1.0 to 10. If the value of Li/M is too low, only a small amount of lithium participates in the reaction to form an anion-deficient lithium transition-metal phosphate, and the precursors of the metal M which do not participate in the reaction with lithium will form, for example, impurities like oxides, and thus reduces the purity of the desired product. Meanwhile, if said value is too high, the lithium excessively added should be recovered from a discharged solution or wasted, thereby lowering economic efficiency.

In step (a), the alkali equivalent ratio of a mixture containing a precursor of the metal M, phosphate compound, alkalinizing agent and lithium precursor is preferably 1 to 10, but is not limited thereto. The alkali equivalent ratio is defined as the ratio between the number of equivalents of hydroxyl ions and the number of equivalents of acid groups ($NO_3$ $SO_4$ etc.) in the mixture. If the alkali equivalent ratio is too low, impurities will be present in the product, and if it is too high, alkaline content in wastewater will be excessively high.

When mixing said metal M's precursor, phosphate compound, alkalinizing agent, and lithium precursor, there is no special limitation to the method and order of mixing. For example, they can be mixed with water all at once, or they can be separately introduced into water, or the metal M's precursor, phosphate compound, alkalinizing agent, and lithium precursor can be mixed first and then the mixture can be introduced into water.

**Step (b):** Producing an anion-deficient lithium transition-metal phosphate by mixing the precursor of anion-deficient lithium transition-metal phosphate with water under a supercritical or subcritical reaction condition, and drying the thus-obtained compound

Reaction temperature and pressure should be suitable so that the anion-deficient lithium transition-metal phosphate of a desired composition can be produced. A supercritical or subcritical condition used herein is a condition where temperature ranges from 200 to 700 ˚C and pressure from 180 to 550 bar. Preferably, said condition should be maintained continuously. A continuous reactor type is preferred.

A reaction temperature below 200˚C makes it difficult to obtain a single-phase high-crystallinity anion-deficient lithium transition-metal phosphate, and a temperature above 700˚C increases the cost of an apparatus for synthesizing the compound. Although hydroxides of alkali metals such as lithium, sodium, and potassium have high solubility in water at ambient temperature and atmospheric pressure, the solubility markedly decreases if the density of water decreases due to high temperature and high pressure. In the case of LiOH, in order to significantly decrease its solubility, it is necessary to maintain the pressure between 180 and 550bar and the temperature between 200 and 700˚C simultaneously.

pH during the reaction is preferably greater than 4.0 and equal to or less than 12.0. If the pH is 4.0 or less, the produced anion-deficient lithium transition-metal phosphate, undesirably, dissolves at the low pH. Meanwhile, a pH above 12.0 causes by-products, corrosion of apparatus, and waste of alkalinizing agents, and necessitates separate steps for washing out an excessive amount of alkalinizing agents and for treating a discharged solution, thereby resulting in low economic efficiency.

Mixing is preferably carried out in a continuous mixer such as a tube-type mixer. In such a mixer, anion-deficient lithium transition-metal phosphate is uniformly formed.

Thereafter, the reaction product is subject to cooling, concentrating and drying. Before a concentrate is subject to drying, it may be washed with clean water to remove impurity salts and ionic impurities which can remain in the concentrate.

The average size of the primary particles prepared at step (b) is 0.01~5μm, preferably 0,01~1μm and more preferably 0.01 to 0.5μm.

**Step (c):** Subjecting the resultant compound of step (b) either to calcination or to granulation and subsequent calcination

An anion-deficient lithium transition-metal phosphate produced at step (b) has low crystallinity and the average size of the primary particles is so small that they are not suitable for use as a cathode-active material for secondary batteries. Accordingly, step (c) improves the crystallinity and controls the size to be suitable for use as a cathode-active material. Preferred size of the cathode-active material for secondary batteries is 1 to 100μm.

Granulation can be conducted simultaneously with drying using various methods known in the art, such as spray drying, fluidized-bed drying, vibration drying. Particularly, spray drying is preferred because it increases the tap density of granules by making the granules spherical.

Calcination increases the crystallinity of an anion-deficient lithium transition-metal phosphate and improves adhesion between crystal particles. Calcination is preferably carried out right after said step (b). Granulation and subsequent calcination are carried out preferably in a continuous manner, because in this case, primary particles, which constitute granules, grow with crystallographic stability. If calcination is not performed, crystals will not be stabilized, and the unstable surface collapses, which causes a serious deterioration in the initial charge and discharge capacities of batteries. Also, without calcination, an electrode-active material will undesirably have a large specific surface area, low tap density, and, as a result, low capacity per volume.

Calcining temperature and time are not limited to specific ranges, but are preferably 300 to 1,200˚C and 1 to 48 hours, respectively. If the temperature is too low or the time is too short, sintering among primary particles may not occur sufficiently, which results in primary particles having low crystallinity and a large specific surface area, and showing a low tap density in an electrode. A compound of low crystallinity changes to a different material during charge and discharge, thereby deteriorating battery performances, such as charge and discharge capacities, power output, and life. Meanwhile, if the temperature is too high or the time is too long, excessive sintering occurs, which brings about disadvantages such as phase decomposition, and processing cost increases.

Before, after, or during at least one of the above steps (a), (b), and (c), it is possible to add one or more additives selected from the group consisting of binders, sintering aids, doping agents, coating agents, reducing agents, oxidizing agents, carbon precursors, metal oxides, and lithium compounds.

A binder can be used to make granules spherical and improve particle size distribution. Non-limiting examples of the binders include water, ammonia water, PVA (poly vinyl alcohol), and mixtures thereof.

A sintering aid can be used during the calcination of granules at a high temperature to lower the sintering temperature or to increase sintering density. Non-limiting examples of the sintering aids include metal oxides, such as boron oxide, magnesium oxide and aluminum oxide, and precursors thereof; and lithium compounds, such as lithium fluoride, lithium hydroxide and lithium carbonate, and precursors thereof.

A doping agent and a coating agent are used to improve the durability of an anion-deficient lithium transition-metal phosphate. Non-limiting examples thereof include metal oxides, such as magnesium oxide, aluminum oxide, titanium oxide, zirconium oxide, and precursors thereof.

A reducing agent or an oxidizing agent can be used to control a certain step to a reducing or oxidizing atmosphere. In the case of anion-deficient lithium transition-metal phosphate, a suitable reducing agent can be used to increase electron conductivity and to suppress transition-metal oxidation or for other purposes. Non-limiting examples of the reducing agents include hydrazine, sodium phosphite, sodium sulfite, sodium nitrite, potassium iodide, sucrose, fructose, oxalic acid, ascorbic acid, hydrogen, carbon, hydrocarbon, and mixtures thereof. Non-limiting examples of the oxidizing agents include oxygen, chlorine, bromine, hydrogen peroxide, permanganic acid, permanganate, hypochlorite, chlorate, ozone, and their mixtures.

An acid is used to promote a reaction. Non-limiting examples of the acids include phosphoric acid, pyrophosphoric acid, polyphosphoric acid, nitric acid, sulfuric acid, hydrochloric acid, acetic acid, oxalic acid, compounds of these acids, and mixtures thereof.

Carbon precursors can be used for coating the surface of an anion-deficient lithium transition-metal phosphate to improve electron conductivity. Non-limiting examples of the carbon precursors include graphite, sucrose, fructose, oxalic acid, ascorbic acid, starch, cellulose, polyvinyl alcohol (PVA), and polyethylene glycol (PEG) and mixtures thereof.

A lithium compound can be added in a calcination step to increase lithium content in an anion-deficient lithium transition-metal phosphate. Non-limiting examples of the lithium compound include lithium fluoride, lithium hydroxide, lithium carbonate, lithium nitrate, lithium acetate, and mixtures thereof.

The composition of an anion-deficient lithium transition-metal phosphate is affected by various factors, such as the mixing ratios of a metal precursor, a phosphate compound, an alkalinizing agent, a lithium precursor and water; the pH of the mixture; and reaction temperature and pressure, etc. By controlling these factors, the composition of a compound can be controlled. Although there can be an optimal combination of said factors for obtaining a compound of a specific composition, the number of combinations for synthesizing compounds of the same composition is not limited to one. A person of skill in the art would know specific combinations of the above factors for obtaining a certain composition without undue experimentation.

**[Examples]**

The present invention can be explained in more detail through the following Examples and Comparative Examples. However, these examples are for the purpose of showing some embodiments of the present invention and they should not be interpreted as limiting the scope of the present invention.

<u>**Example 1**</u>: Preparation of an anion-deficient compound wherein the metal M is a combination of Mn and Fe

A first water solution was prepared by dissolving 0.25 mol of manganese sulfate ($MnSO_4$ and 0.75 mol of ferrous sulfate ($FeSO_4$ as precursors of the metal M, 1 mol of phosphoric acid as a phosphate compound, and 27.8g of sucrose as a reducing agent in 1.6 L of water. A second water solution was prepared by dissolving 1.5 mol of ammonia as an alkalinizing agent and 2 mol of lithium hydroxide as a lithium precursor in 1.2 L of water.

The above two water solutions were processed in the order of the following steps (a), (b), and (c) to prepare an anion-deficient lithium manganese iron phosphate.

Step (a): The above two water solutions were mixed by continuously pumping each of them into a mixer at room temperature and a pressure of 250 bar. As a result, a slurry containing a lithium transition-metal phosphate precursor was prepared.

Step (b): The lithium transition-metal phosphate precursor was mixed with ultra-pure water in a mixer by pumping, under a pressure of 250 bar, ultra-pure water of about 450°C onto the precursor in the mixer. The mixture was moved to a reactor maintained at 380°C and 250 bar and remained therein for seven seconds. An anion-deficient lithium transition-metal phosphate having low crystallinity was consecutively formed. The lithium iron phosphate was cooled and concentrated. The concentrate was mixed with sucrose of 10 wt% based on the weight of the lithium transtion-metal phosphate component in the concentrate, and the mixture was spray-dried in a spray dryer to form granules.

Step (c): The dry granules formed through spray drying were calcined for 10 hours at 700˚C, thereby producing an anion-deficient lithium transtion-metal phosphate with improved crystallinity and improved adhesion between crystal particles.

At step (b), the pH of the mixture in the mixer was 8.5.

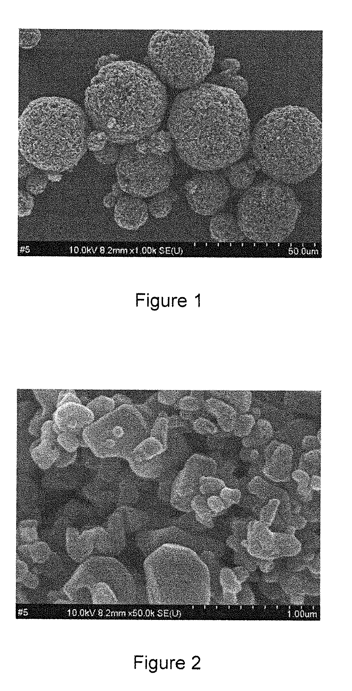

Scanning electron microscopy (SEM) was performed to determine the sizes and the shapes of lithium transtion-metal phosphate particles. Figure 1 is a SEM photograph of granulated particles at a magnification of 1,000 times and shows that the particle size is 5~30$\mu$m. Figure 2 is a SEM photograph which was taken of part of a granule at a magnification of 50,000 times and shows nanometer-size ultrafine particles which constitute the granule.

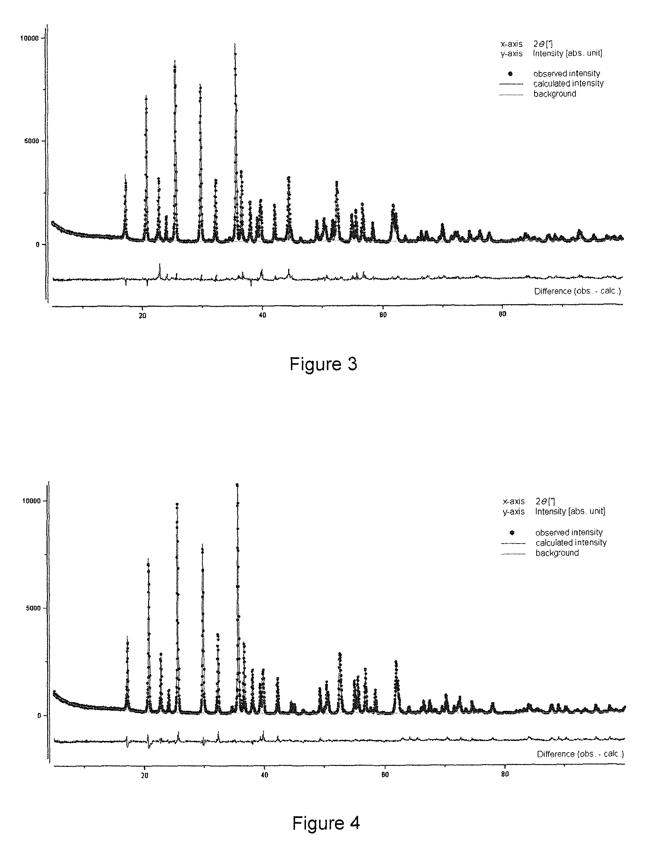

Figure 3 shows the result of Rietveld refinement performed on X-ray diffraction patterns of the synthesized compound. The occupancy ratios of the ions in a unit cell were computed by modeling the result of Rietveld refinement, and it was found that the compound was $Li_{0.89}(Mn_{0.25}Fe_{0.75})(PO_4)_{0.96}$.

(As set forth above, for the purpose of maximizing the discharging capacity of a lithium secondary battery etc., Li may be added in an excessive amount when preparing a lithium transtion-metal phosphate. Such excessively added Li was excluded from the amount of lithium in calculating the above molar ratio of Li. The molar ratio counted only the Li which constituted the anion-deficient lithium transtion-metal phosphate of the present invention. The molar ratio of Li was calculated in the same way in the other Examples given below.)

**Example 2**: Preparation of an anion-deficient compound wherein the metal M is a combination of Mn and Fe

A first water solution was prepared by dissolving 0.50 mol of manganese sulfate, 0.50 mol of ferrous sulfate, 1 mol of phosphoric acid, and 27.8g of sucrose in 1.6 L of water. A second water solution was prepared by dissolving 1.5 mol of ammonia and 2 mol of lithium hydroxide in 1.2 L of water.

The above two solutions were processed in the same way under the same conditions as in steps (a), (b), and (c) of Example 1 except that the pH of the mixture in the mixer in step (b) was different (likewise, pH varies depending on the identity and amounts of the starting materials in the other Examples given below). As a result, an anion-deficient lithium manganese iron phosphate was obtained.

The final product was assayed with an inductively coupled plasma (ICP) spectrometer and the compound was found to be $Li_{0.90}(Mn_{0.50}Fe_{0.50})(PO_4)_{0.96}$.

**Example 3:** Preparation of an anion-deficient compound wherein the metal M is a combination of Mn and Fe

A first water solution was prepared by dissolving 0.75 mol of manganese sulfate, 0.25 mol of ferrous sulfate, 1 mol of phosphoric acid, and 27.8g of sucrose in 1.6 L of water. A second water solution was prepared by dissolving 1.5 mol of ammonia and 2 mol of lithium hydroxide in 1.2 L of water.

An anion-deficient lithium manganese iron phosphate was prepared by processing the above two solutions in the same way under the same conditions as in steps (a), (b), and (c) of Example 1.

The final product was assayed with an inductively coupled plasma (ICP) spectrometer, and the compound was found to be $Li_{0.90}(Mn_{0.75}Fe_{0.25})(PO_4)_{0.97}$.

**Example 4**: Preparation of an anion-deficient compound wherein the metal M is Mn

A first water solution was prepared by dissolving 1 mol of manganese sulfate, 1 mol of phosphoric acid, and 27.8g of sucrose in 1.6 L of water. A second water solution was prepared by dissolving 1.5 mol of ammonia and 2 mol of lithium hydroxide in 1.2 L of water.

An anion-deficient lithium manganese phosphate was prepared by processing the above two solutions in the same way under the same conditions as in steps (a), (b), and (c) of Example 1.

Rietveld refinement was performed on the X-ray diffraction pattern of the final product, and the occupancy ratios of the ions in a unit cell were computed by modeling the result of Rietveld refinement and, as a result, the final product was found to be $Li_{0.91}Mn(PO_4)_{0.97}$. Figure 4 shows the result of Rietveld refinement performed on the X-ray diffraction pattern.

**Example 5:** Preparation of an anion-deficient compound wherein the metal M is a combination of Co and Fe

A first water solution was prepared by dissolving 0.25 mol of cobalt nitrate ($Co(NO_3)_2$), 0.75 mol of ferrous sulfate, 1 mol of phosphoric acid, and 27.8g of sucrose in 1.6 L of water. A second water solution was prepared by dissolving 1.5 mol of ammonia and 2 mol of lithium hydroxide in 1.2 L of water.

An anion-deficient lithium cobalt iron phosphate was prepared by processing the above two solutions in the same way under the same conditions as in steps (a), (b), and (c) of Example 1.

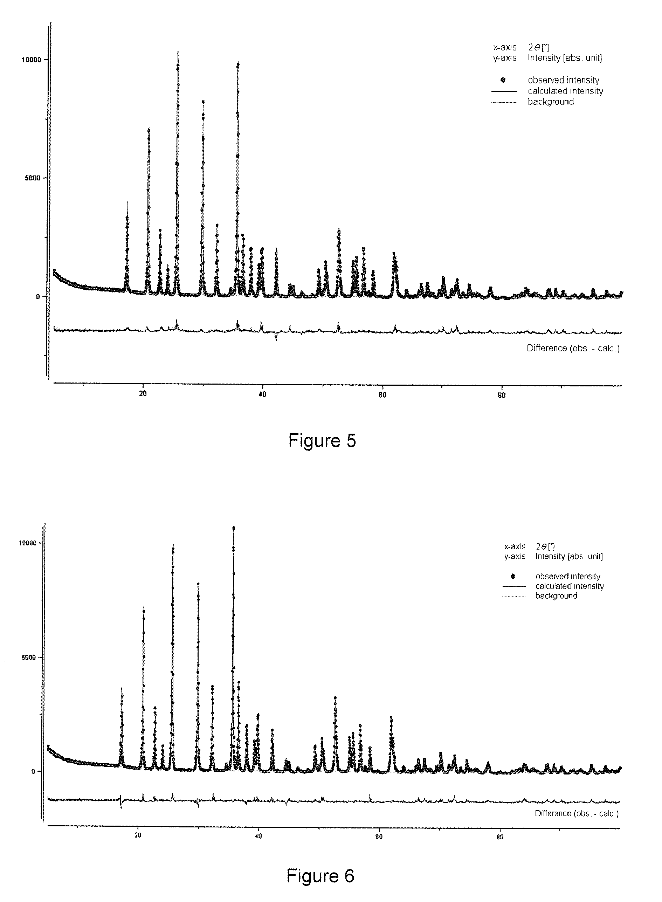

Rietveld refinement was performed on the X-ray diffraction pattern of the final product, and the occupancy ratios of the ions in a unit cell were computed by modeling the result of Rietveld refinement and, as a result, the final product was found to be $Li_{0.91}(Co_{0.25}Fe_{0.75})(PO_4)_{0.97}$. Figure 5 shows the result of Rietveld refinement performed on the X-ray diffraction pattern.

**Example 6:** Preparation of an anion-deficient compound wherein the metal M is a combination of Co and Fe

A first water solution was prepared by dissolving 0.50 mol of cobalt nitrate, 0.50 mol of ferrous sulfate, 1 mol of phosphoric acid, and 27.8g of sucrose in 1.6 L of water. A second water solution was prepared by dissolving 1.5 mol of ammonia and 2 mol of lithium hydroxide in 1.2 L of water.

An anion-deficient lithium cobalt iron phosphate was prepared by processing the above two solutions in the same way under the same conditions as in steps (a), (b), and (c) of Example 1.

The final product was assayed with an inductively coupled plasma (ICP) spectrometer, and the compound was found to be $Li_{0.91}(Co_{0.50}Fe_{0.50})(PO_4)_{0.97}$.

**Example 7:** Preparation of an anion-deficient compound wherein the metal M is a combination of Co and Fe

A first water solution was prepared by dissolving 0.75 mol of cobalt nitrate, 0.25 mol of ferrous sulfate, 1 mol of phosphoric acid, and 27.8g of sucrose in 1.6 L of water. A second water solution was prepared by dissolving 1.5 mol of ammonia and 2 mol of lithium hydroxide in 1.2 L of water.

An anion-deficient lithium cobalt iron phosphate was prepared by processing the above two solutions in the same way under the same conditions as in steps (a), (b), and (c) of Example 1.

The final product was assayed with an inductively coupled plasma (ICP) spectrometer, and the compound was found to be $Li_{0.90}(Co_{0.75}Fe_{0.25})(PO_4)_{0.97}$.

**Example 8**: Preparation of an anion-deficient compound wherein the metal M is Co

A first water solution was prepared by dissolving 1 mol of cobalt nitrate, 1 mol of phosphoric acid, and 27.8g of sucrose in 1.6 L of water. A second water solution was prepared by dissolving 1.5 mol of ammonia and 2 mol of lithium hydroxide in 1.2 L of water.

An anion-deficient lithium cobalt phosphate was prepared by processing the above two solutions in the same way under the same conditions as in steps (a), (b), and (c) of Example 1.

Rietveld refinement was performed on the X-ray diffraction pattern of the final product, and the occupancy ratios of the ions in a unit cell were computed by modeling the result of Rietveld refinement and, as a result, the final product was found to be $Li_{0.90}Co(PO_4)_{0.97}$. Figure 6 shows the result of Rietveld refinement performed on the X-ray diffraction pattern.

**Example 9**: Preparation of an anion-deficient compound wherein the metal M is a combination of Ni and Fe

A first water solution was prepared by dissolving 0.25 mol of nickel nitrate ($Ni(NO_3)_2$), 0.75 mol of ferrous sulfate, 1 mol of phosphoric acid, and 27.8g of sucrose in 1.6 L of water. A second water solution was prepared by dissolving 1.5 mol of ammonia and 2 mol of lithium hydroxide in 1.2 L of water.

An anion-deficient lithium nickel iron phosphate was prepared by processing the above two solutions in the same way under the same conditions as in steps (a), (b), and (c) of Example 1.

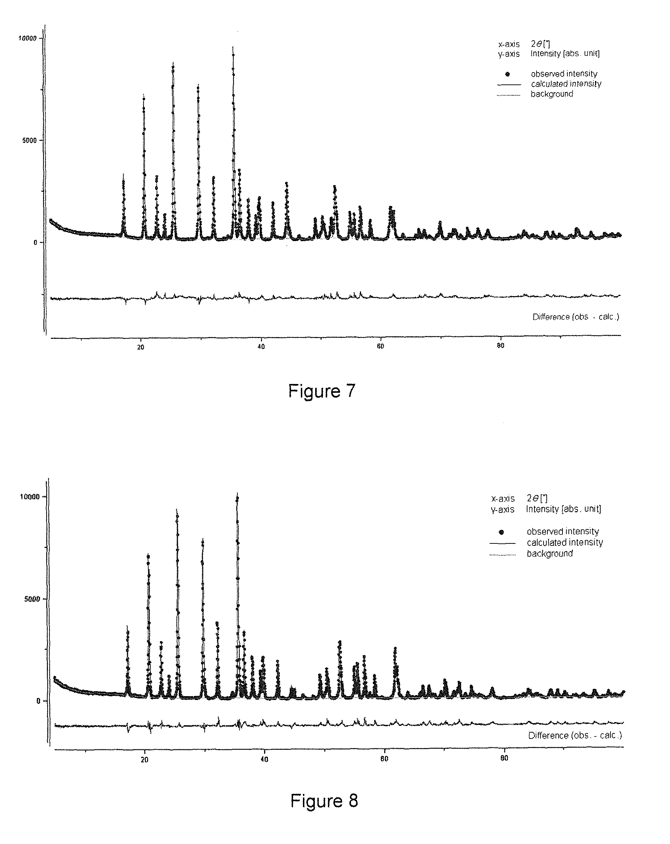

Rietveld refinement was performed on the X-ray diffraction pattern of the final product, and the occupancy ratios of the ions in a unit cell were computed by modeling the result of Rietveld refinement and, as a result, the final product was found to be $Li_{0.91}(Ni_{0.26}Fe_{0.74})(PO_4)_{0.97}$. Figure 7 shows the result of Rietveld refinement performed on the X-ray diffraction pattern.

**Example 10**: Preparation of an anion-deficient compound wherein the metal M is a combination of Ni and Fe

A first water solution was prepared by dissolving 0.50 mol of nickel nitrate, 0.50 mol of ferrous sulfate, 1 mol of phosphoric acid, and 27.8g of sucrose in 1.6 L of water. A second water solution was prepared by dissolving 1.5 mol of ammonia and 2 mol of lithium hydroxide in 1.2 L of water.

An anion-deficient lithium nickel iron phosphate was prepared by processing the above two solutions in the same way under the same conditions as in steps (a), (b), and (c) of Example 1.

The final product was assayed with an inductively coupled plasma (ICP) spectrometer, and the compound was found to be $Li_{0.92}(Ni_{0.50}Fe_{0.50})(PO_4)_{0.97}$.

**Example 11**: Preparation of an anion-deficient compound wherein the metal M is a combination of Ni and Fe

A first water solution was prepared by dissolving 0.75 mol of nickel nitrate, 0.25 mol of ferrous sulfate, 1 mol of phosphoric acid, and 27.8g of sucrose in 1.6 L of water. A second water solution was prepared by dissolving 1.5 mol of ammonia and 2 mol of lithium hydroxide in 1.2 L of water.
An anion-deficient lithium nickel iron phosphate was prepared by processing the above two solutions in the same way under the same conditions as in steps (a), (b), and (c) of Example 1.
The final product was assayed with an inductively coupled plasma (ICP) spectrometer, and the compound was found to be $Li_{0.92}(Ni_{0.75}Fe_{0.25})(PO_4)_{0.98}$.

**Example 12**: Preparation of an anion-deficient compound wherein the metal M is Ni

A first water solution was prepared by dissolving 1 mol of nickel nitrate, 1 mol of phosphoric acid, and 27.8g of sucrose in 1.6 L of water. A second water solution was prepared by dissolving 1.5 mol of ammonia and 2 mol of lithium hydroxide in 1.2 L of water.
An anion-deficient lithium nickel phosphate was prepared by processing the above two solutions in the same way under the same conditions as in steps (a), (b), and (c) of Example 1.
Rietveld refinement was performed on the X-ray diffraction pattern of the final product, and the occupancy ratios of the ions in a unit cell were computed by modeling the result of Rietveld refinement and, as a result, the final product was found to be $Li_{0.93}Ni(PO_4)_{0.98}$. Figure 8 shows the result of Rietveld refinement performed on the X-ray diffraction pattern.

**Example 13**: Preparation of an anion-deficient compound wherein the metal M is a combination of Mn, Co, and Ni

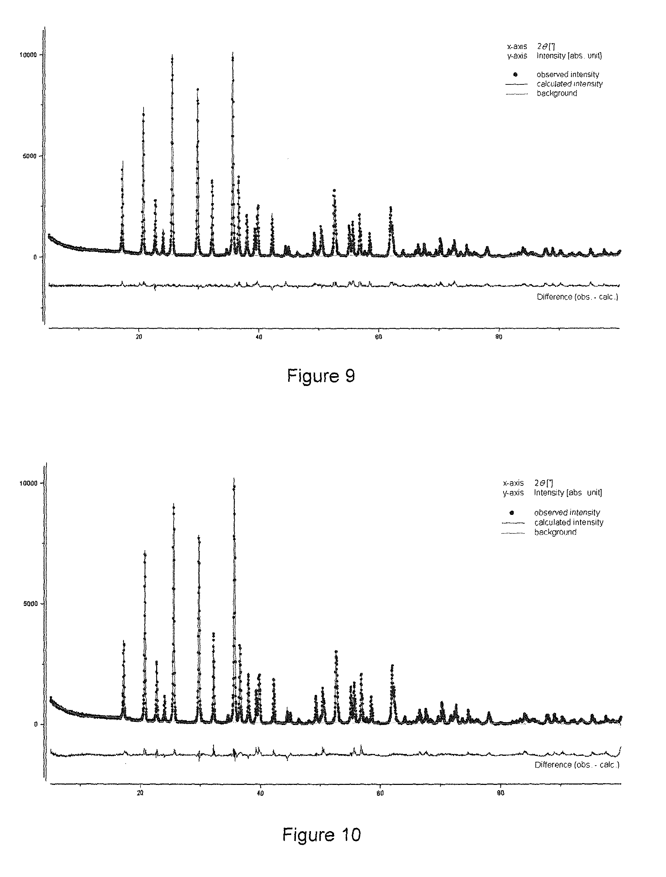

A first water solution was prepared by dissolving 1/3 (one third) mol of manganese sulfate, 1/3 mol of cobalt nitrate, 1/3 mol of nickel nitrate, 1 mol of phosphoric acid, and 27.8g of sucrose in 1.6 L of water. A second water solution was prepared by dissolving 1.5 mol of ammonia and 2 mol of lithium hydroxide in 1.2 L of water.
An anion-deficient lithium manganese cobalt nickel phosphate was prepared by processing the above two solutions in the same way under the same conditions as in steps (a), (b), and (c) of Example 1.
Rietveld refinement was performed on the X-ray diffraction pattern of the final product, and the occupancy ratios of the ions in a unit cell were computed by modeling the result of Rietveld refinement and, as a result, the final product was found to be $Li_{0.89}(Mn_{0.33}Co_{0.33}Ni_{0.33})(PO_4)_{0.96}$. Figure 9 shows the result of Rietveld refinement performed on the X-ray diffraction pattern.

**Example 14**: Preparation of an anion-deficient compound wherein the metal M is a combination of Mn, Co, Ni, and Fe

A first water solution was prepared by dissolving 0.25 mol of manganese sulfate, 0.25 mol of cobalt nitrate, 0.25 mol of nickel nitrate, 0.25 mol of ferrous sulfate, 1 mol of phosphoric acid, and 27.8g of sucrose in 1.6 L of water. A second water solution was prepared by dissolving 1.5 mol of ammonia and 2 mol of lithium hydroxide in 1.2 L of water.
An anion-deficient lithium manganese cobalt nickel iron phosphate was prepared by processing the above two solutions in the same way under the same conditions as in steps (a), (b), and (c) of Example 1.
Rietveld refinement was performed on the X-ray diffraction pattern of the final product, and the occupancy ratios of the ions in a unit cell were computed by modeling the result of Rietveld refinement and, as a result, the final product was found to be $Li_{0.90}(Mn_{0.25}Co_{0.25}Ni_{0.25}Fe_{0.25})(PO_4)_{0.97}$. Figure 10 shows the result of Rietveld refinement performed on the X-ray diffraction pattern.

**Example 15**: Preparation of an anion-deficient compound wherein the metal M is a combination of Mg and Fe

A first water solution was prepared by dissolving 0.07 mol of magnesium sulfate ($MgSO_4$), 0.93 mol of ferrous sulfate, 1 mol of phosphoric acid, and 27.8g of sucrose in 1.6 L of water. A second water solution was prepared by dissolving 1.5 mol of ammonia and 2 mol of lithium hydroxide in 1.2 L of water.
An anion-deficient lithium magnesium iron phosphate was prepared by processing the above two solutions in the same way under the same conditions as in steps (a), (b), and (c) of Example 1.
The final product was assayed with an inductively coupled plasma (ICP) spectrometer, and the compound was found to be $Li_{0.88}(Mg_{0.07}Fe_{0.93})(PO_4)_{0.96}$.

**Example 16**: Preparation of an anion-deficient compound wherein the metal M is a combination of Mg and Mn

A first water solution was prepared by dissolving 0.10 mol of magnesium sulfate, 0.90 mol of manganese sulfate, 1 mol of phosphoric acid, and 27.8g of sucrose in 1.6 L of water. A second water solution was prepared by dissolving 1.5 mol of ammonia and 2 mol of lithium hydroxide in 1.2 L of water.
An anion-deficient lithium magnesium manganese phosphate was prepared by processing the above two solutions in the same way under the same conditions as in steps (a), (b), and (c) of Example 1.
The final product was assayed with an inductively coupled plasma (ICP) spectrometer, and the compound was found to be $Li_{0.92}(Mg_{0.10}Mn_{0.90})(PO_4)_{0.97}$.

**Example 17**: Preparation of an anion-deficient compound wherein the metal M is a combination of Al, Mn, and Fe

A first water solution was prepared by dissolving 0.03 mol of aluminum nitrate $(Al(NO_3)_3)$, 0.78 mol of manganese sulfate, 0.19 mol of ferrous sulfate, 1 mol of phosphoric acid, and 27.8g of sucrose in 1.6 L of water. A second water solution was prepared by dissolving 1.5 mol of ammonia and 2 mol of lithium hydroxide in 1.2 L of water.
An anion-deficient lithium aluminum manganese iron phosphate was prepared by processing the above two solutions in the same way under the same conditions as in steps (a), (b), and (c) of Example 1.
The final product was assayed with an inductively coupled plasma (ICP) spectrometer, and the compound was found to be $Li_{0.85}(Al_{0.33}Mn_{0.78}Fe_{0.19})(PO4)_{0.98}$.

**Example 18:** Preparation of an anion-deficient compound wherein the metal M is a combination of Mn, Co, Ni, and Fe

A first water solution was prepared by dissolving 0.25 mol of manganese sulfate, 0.25 mol of cobalt nitrate, 0.25 mol of nickel nitrate, 0.25 mol of ferrous sulfate, 1.1 mol of phosphoric acid, and 27.8g of sucrose in 1.6 L of water. A second water solution was prepared by dissolving 1.5 mol of ammonia and 2 mol of lithium hydroxide in 1.2 L of water.
An anion-deficient lithium manganese cobalt nickel iron phosphate was prepared by processing the above two solutions in the same way under the same conditions as in steps (a), (b), and (c) of Example 1.
At step (b), the pH of the mixture in the mixer was 7.9.
The final product was assayed with an inductively coupled plasma (ICP) spectrometer, and the compound was found to be $Li_{0.94}(Mn_{0.25}Co_{0.25}Ni_{0.25}Fe_{0.25})(PO_4)_{0.98}$.

**Example 19**: Preparation of an anion-deficient compound wherein the metal M is a combination of Mn, Co, Ni, and Fe

A first water solution was prepared by dissolving 0.25 mol of manganese sulfate, 0.25 mol of cobalt nitrate, 0.25 mol of nickel nitrate, 0.25 mol of ferrous sulfate, 1.2 mol of phosphoric acid, and 27.8g of sucrose in 1.6 L of water. A second water solution was prepared by dissolving 1.5 mol of ammonia and 2 mol of lithium hydroxide in 1.2 L of water.
An anion-deficient lithium manganese cobalt nickel iron phosphate was prepared by processing the above two solutions in the same way under the same conditions as in steps (a), (b), and (c) of Example 1.
At step (b), the pH of the mixture in the mixer was 6.6.
The final product was assayed with an inductively coupled plasma (ICP) spectrometer, and the compound was found to be $Li_{0.97}(Mn_{0.25}Co_{0.25}Ni_{0.25}Fe_{0.25})(PO_4)_{0.99}$.

**Example 20**: Preparation of an anion-deficient compound wherein the metal M is a combination of Mn, Co, Ni, and Fe

A first water solution was prepared by dissolving 0.25 mol of manganese sulfate, 0.25 mol of cobalt nitrate, 0.25 mol of nickel nitrate, 0.25 mol of ferrous sulfate, 1 mol of phosphoric acid, and 27.8g of sucrose in 1.6 L of water. A second water solution was prepared by dissolving 2.0 mol of ammonia and 2 mol of lithium hydroxide in 1.2 L of water.
An anion-deficient lithium manganese cobalt nickel iron phosphate was prepared by processing the above two solutions in the same way under the same conditions as in steps (a), (b), and (c) of Example 1.
At step (b), the pH of the mixture in the mixer was 9.2.
The final product was assayed with an inductively coupled plasma (ICP) spectrometer, and the compound was found to be $Li_{0.89}(Mn_{0.25}Co_{0.25}Ni_{0.25}Fe_{0.25})(PO_4)_{0.96}$.

**Example 21**: Preparation of an anion-deficient compound wherein the metal M is a combination of Mn, Co, Ni, and Fe

A first water solution was prepared by dissolving 0.25 mol of manganese sulfate, 0.25 mol of cobalt nitrate, 0.25 mol of nickel nitrate, 0.25 mol of ferrous sulfate, 1 mol of phosphoric acid, and 27.8g of sucrose in 1.6 L of water. A second water solution was prepared by dissolving 2.5 mol of ammonia and 2 mol of lithium hydroxide in 1.2 L of water.

An anion-deficient lithium manganese cobalt nickel iron phosphate was prepared by processing the above two solutions in the same way under the same conditions as in steps (a), (b), and (c) of Example 1.

At step (b), the pH of the mixture in the mixer was 9.5.

The final product was assayed with an inductively coupled plasma (ICP) spectrometer, and the compound was found to be $Li_{0.86}(Mn_{0.25}Co_{0.25}Ni_{0.25}Fe_{0.25})(PO_4)_{0.95}$.

**Comparative Example 1:** Preparation of a stoichiometric compound wherein the metal M is a combination of Mn and Fe

0.25 mol of manganese oxalate ($MnC_2O_4$) and 0.75 mol of ferrous oxalate ($FeC_2O_4$) as metal precursors, 1 mol of diammonium phosphate (($NH4)_2HPO_4$) as a phosphate compound, and 0.55 mol of lithium carbonate ($Li_2CO_3$) as a lithium precursor were prepared.

The above materials were processed in the order of following steps (a), (b) and (c) to prepare a stoichiometric lithium manganese iron phosphate according to a conventional solid-state reaction method.

Step (a): The above materials were first mixed for 8 hours by using zirconia ball milling at 350 rpm.

Step (b): The first mixture of step (a) was mixed with 32.4 g of sucrose, which was a carbon precursor. The resultant mixture underwent a first heat treatment for 6 hours at 500˚C in an argon environment, and thereby a carbon-coated lithium transition-metal phosphate of low crystallinity was obtained.

Step (c): A second heat treatment was conducted on the carbon-coated compound of low crystallinity for 5 hours at 675˚C in an argon environment, and thereby a lithium transition-metal phosphate of high crystallinity was obtained.

An analysis of X-ray diffraction patterns of the synthesized product revealed that the product had an olivine crystal structure. Further, the product was assayed with an inductively coupled plasma (ICP) spectrometer and was found to be $Li(Mn_{0.25}Fe_{0.75})PO_4$.

**Comparative Example 2:** Preparation of a stoichiometric compound wherein the metal M is a combination of Mn and Fe

0.50 mol of manganese oxalate, 0.50 mol of ferrous oxalate, 1 mol of diammonium phosphate, and 0.55 mol of lithium carbonate were prepared.

A stoichiometric lithium manganese iron phosphate was prepared by processing the above materials in the same way under the same conditions as in steps (a), (b), and (c) of Comparative Example 1.

An analysis of X-ray diffraction patterns of the synthesized product revealed that the product had an olivine crystal structure. Further, the product was assayed with an inductively coupled plasma (ICP) spectrometer and was found to be $Li(Mn_{0.50}Fe_{0.50})PO_4$.

**Comparative Example 3**: Preparation of a stoichiometric compound wherein the metal M is a combination of Mn and Fe

0.75 mol of manganese oxalate, 0.25 mol of ferrous oxalate, 1 mol of diammonium phosphate, and 0.55 mol of lithium carbonate were prepared.

A stoichiometric lithium manganese iron phosphate was prepared by processing the above materials in the same way under the same conditions as in steps (a), (b), and (c) of Comparative Example 1.

An analysis of X-ray diffraction patterns of the synthesized product revealed that the product had an olivine crystal structure. Further, the product was assayed with an inductively coupled plasma (ICP) spectrometer and was found to be $Li(Mn_{0.75}Fe_{0.25})PO_4$.

**Comparative Example 4:** Preparation of a stoichiometric compound wherein the metal M is Mn

1 mol of manganese oxalate, 1 mol of diammonium phosphate, and 0.55 mol of lithium carbonate were prepared.

A stoichiometric lithium manganese phosphate was prepared by processing the above materials in the same way under the same conditions as in steps (a), (b), and (c) of Comparative Example 1.

An analysis of X-ray diffraction patterns of the synthesized product revealed that the product had an olivine crystal structure. Further, the product was assayed with an inductively coupled plasma (ICP) spectrometer and was found to be $LiMnPO_4$.

**Comparative Example 5**: Preparation of a stoichiometric compound wherein the metal M is a combination of Co and Fe

A first water solution was prepared by dissolving 0.25 mol of cobalt acetate ($Co(CH_3CO_2)_2$) and 0.75 mol of ferrous oxalate as metal precursors, 1 mol of monoammonium phosphate ($NH_4H_2PO_4$) as a phosphate compound, and 0.525 mol of lithium carbonate ($Li_2CO_3$) as a lithium precursor in distilled water. A second water solution was prepared by dissolving 1 mol of citric acid as both a gelation agent and a carbon precursor in distilled water.

A stoichiometric lithium cobalt iron phosphate was prepared according to a conventional sol-gel method by processing the above two solutions in the order of the following steps (a), (b), and (c).

Step (a): A mixed solution was prepared by slowly adding the second water solution to the first water solution.

Step (b): The resultant mixture of step (a) was heat-treated at 70˚C until the occurrence of gelation, and, as a result, a precursor gel of lithium transition-metal phosphate was obtained.

Step (c): The gel obtained at step (b) underwent a first heat treatment for 3 hours at 500˚C in a nitrogen environment, and then a second heat treatment for 10 hours at 675˚C, and thereby a stoichiometric lithium transition-metal phosphate was obtained.

An analysis of X-ray diffraction patterns of the synthesized product revealed that the product had an olivine crystal structure. Further, the product was assayed with an inductively coupled plasma (ICP) spectrometer and was found to be $Li(Co_{0.25}Feo_{0.75})PO_4$.

**Comparative Example 6**: Preparation of a stoichiometric compound wherein the metal M is a combination of Co and Fe

A first water solution was prepared by dissolving 0.50 mol of cobalt acetate, 0.50 mol of ferrous oxalate, 1 mol of monoammonium phosphate, and 0.525 mol of lithium carbonate in distilled water. A second water solution was prepared by dissolving 1 mol of citric acid in distilled water.

A stoichiometric lithium cobalt iron phosphate was prepared by processing the above two solutions in the same way under the same conditions as in steps (a), (b), and (c) of Comparative Example 5.

An analysis of X-ray diffraction patterns of the synthesized product revealed that the product had an olivine crystal structure. Further, the product was assayed with an inductively coupled plasma spectrometer and was found to be $Li(Co_{0.50}Fe_{0.50})PO_4$.

**Comparative Example 7:** Preparation of a stoichiometric compound wherein the metal M is a combination of Co and Fe

A first water solution was prepared by dissolving 0.75 mol of cobalt acetate, 0.25 mol of ferrous oxalate, 1 mol of monoammonium phosphate, and 0.525 mol of lithium carbonate in distilled water. A second water solution was prepared by dissolving 1 mol of citric acid in distilled water.

A stoichiometric lithium cobalt iron phosphate was prepared by processing the above two solutions in the same way under the same conditions as in steps (a), (b), and (c) of Comparative Example 5.

An analysis of X-ray diffraction patterns of the synthesized product revealed that the product had an olivine crystal structure. Further, the product was assayed with an inductively coupled plasma spectrometer and was found to be $Li(Co_{0.75}Fe_{0.25})PO_4$.

**Comparative Example 8**: Preparation of a stoichiometric compound wherein the metal M is Co

A first water solution was prepared by dissolving 1 mol of cobalt acetate, 1 mol of monoammonium phosphate, and 0.525 mol of lithium carbonate in distilled water. A second water solution was prepared by dissolving 1 mol of citric acid in distilled water.

A stoichiometric lithium cobalt phosphate was prepared by processing the above two solutions in the same way under the same conditions as in steps (a), (b), and (c) of Comparative Example 5.

An analysis of X-ray diffraction patterns of the synthesized product revealed that the product had an olivine crystal structure. Further, the product was assayed with an inductively coupled plasma spectrometer and was found to be $LiCoPO_4$.

**Comparative Example 9:** Preparation of a stoichiometric compound wherein the metal M is a combination of Ni and Fe

A first water solution was prepared by dissolving 0.25 mol nickel acetate ($Ni(CH_3CO_2)_2$), 0.75 mol of ferrous oxalate, 1 mol of monoammonium phosphate, and 0.525 mol of lithium carbonate in distilled water. A second water solution was prepared by dissolving 1 mol of citric acid in distilled water.

A stoichiometric lithium nickel iron phosphate was prepared by processing the above two solutions in the same way under the same conditions as in steps (a), (b), and (c) of Comparative Example 5.

An analysis of X-ray diffraction patterns of the synthesized product revealed that the product had an olivine crystal structure. Further, the product was assayed with an inductively coupled plasma spectrometer and was found to be $Li(Ni_{0.25}Fe_{0.75})PO_4$.

**Comparative Example 10**: Preparation of a stoichiometric compound wherein the metal M is a combination of Ni and Fe

A first water solution was prepared by dissolving 0.50 mol nickel acetate, 0.50 mol of ferrous oxalate, 1 mol of monoammonium phosphate, and 0.525 mol of lithium carbonate in distilled water. A second water solution was prepared by dissolving 1 mol of citric acid in distilled water.

A stoichiometric lithium nickel iron phosphate was prepared by processing the above two solutions in the same way under the same conditions as in steps (a), (b), and (c) of Comparative Example 5.

An analysis of X-ray diffraction patterns of the synthesized product revealed that the product had an olivine crystal structure. Further, the product was assayed with an inductively coupled plasma spectrometer and was found to be $Li(Ni_{0.50}Fe_{0.50})PO_4$.

**Comparative Example 11**: Preparation of a stoichiometric compound wherein the metal M is a combination of Ni and Fe

A first water solution was prepared by dissolving 0.75 mol nickel acetate, 0.25 mol of ferrous oxalate, 1 mol of monoammonium phosphate, and 0.525 mol of lithium carbonate in distilled water. A second water solution was prepared by dissolving 1 mol of citric acid in distilled water.

A stoichiometric lithium nickel iron phosphate was prepared by processing the above two solutions in the same way under the same conditions as in steps (a), (b), and (c) of Comparative Example 5.

An analysis of X-ray diffraction patterns of the synthesized product revealed that the product had an olivine crystal structure. Further, the product was assayed with an inductively coupled plasma spectrometer and was found to be $Li(Ni_{0.75}Fe_{0.25})PO_4$.

**Comparative Example 12**: Preparation of a stoichiometric compound wherein the metal M is Ni

A first water solution was prepared by dissolving 1 mol of nickel acetate, 1 mol of monoammonium phosphate, and 0.525 mol of lithium carbonate in distilled water. A second water solution was prepared by dissolving 1 mol of citric acid in distilled water.

A stoichiometric lithium nickel phosphate was prepared by processing the above two solutions in the same way under the same conditions as in steps (a), (b), and (c) of Comparative Example 5.

An analysis of X-ray diffraction patterns of the synthesized product revealed that the product had an olivine crystal structure. Further, the product was assayed with an inductively coupled plasma spectrometer and was found to be $LiNiPO_4$.

**Comparative Example 13:** Preparation of a stoichiometric compound wherein the metal M is a combination of Mn, Co, and Ni

A first water solution was prepared by dissolving 0.3 mol of manganese acetate, 0.3 mol of cobalt acetate, 0.3 mol of nickel acetate, 0.9 mol of monoammonium phosphate, and 0.473 mol of lithium carbonate in distilled water. A second water solution was prepared by dissolving 0.9 mol of citric acid in distilled water.

A stoichiometric lithium manganese cobalt nickel phosphate was prepared according to a conventional sol-gel method by processing the above two solutions in the order of the following steps (a), (b), and (c).

Step (a): A mixed solution was prepared by slowly adding the second water solution to the first water solution.

Step (b): The resultant mixture of step (a) was heat-treated at 80˚C until the occurrence of gelation, and, as a result, a precursor gel of lithium transition-metal phosphate was obtained.

Step (c): The gel obtained at step (b) underwent a first heat treatment for 4 hours at 350˚C in an argon environment, and then a second heat treatment for 10 hours at 600˚C, and thereby a stoichiometric lithium transition-metal phosphate was obtained.

An analysis of X-ray diffraction patterns of the synthesized product revealed that the product had an olivine crystal structure. Further, the product was assayed with an ICP spectrometer and was found to be $Li(Mn_{0.33}Co_{0.33}Ni_{0.33})PO_4$.

**Comparative Example 14:** Preparation of a stoichiometric compound wherein the metal M is a combination of Mn, Co, Ni and Fe

A first water solution was prepared by dissolving 0.25 mol of manganese acetate, 0.25 mol of cobalt acetate, 0.25 mol of nickel acetate, 0.25 mol of ferrous oxalate, 1 mol of monoammonium phosphate, and 1 mol of lithium carbonate in distilled water. A second water solution was prepared by dissolving 0.9 mol of citric acid in distilled water.

A stoichiometric lithium manganese cobalt nickel iron phosphate was prepared according to a conventional sol-gel method by processing the above two solutions in the order of the following steps (a), (b), and (c).

Step (a): A mixed solution was prepared by slowly adding the second water solution to the first water solution.

Step (b): The resultant mixture of step (a) was heat-treated at 70˚C until the occurrence of gelation, and, as a result, a precursor gel of lithium transition-metal phosphate was obtained.

Step (c): The gel obtained at step (b) underwent a first heat treatment for 5 hours at 500˚C in an argon environment, and then a second heat treatment for 10 hours at 650˚C, and thereby a stoichiometric lithium transition-metal phosphate was obtained.

An analysis of X-ray diffraction patterns of the synthesized product revealed that the product had an olivine crystal structure. Further, the product was assayed with an ICP spectrometer and was found to be Li $(Mn_{0.25}Co_{0.25}Ni_{0.25}Fe_{0.25})PO_4$.

**Comparative Example 15:** Preparation of an anion-deficient compound wherein the metal M is a combination of Mn, Co, Ni, and Fe

A first water solution was prepared by dissolving 0.25 mol of manganese sulfate, 0.25 mol of cobalt nitrate, 0.25 mol of nickel nitrate, 0.25 mol of ferrous sulfate, 1 mol of phosphoric acid, and 27.8g of sucrose in 1.6 L of water. A second water solution was prepared by dissolving 3 mol of ammonia and 2 mol of lithium hydroxide in 1.2 L of water.

An anion-deficient lithium manganese cobalt nickel iron phosphate was prepared by processing the above two solutions in the same way under the same conditions as in steps (a), (b), and (c) of Example 1.

An analysis of X-ray diffraction patterns of the synthesized product revealed that the product had an olivine crystal structure. Further, the product was assayed with an ICP spectrometer and was found to be $Li_{0.83}$ $(Mn_{0.25}Co_{0.25}Ni_{0.25}Fe_{0.25})(PO_4)_{0.94}$.

**Investiaation and Evaluation of Characteristics and Performance**

The characteristics and performance of the compounds of the working examples were investigated and evaluated as follows.

**Investigation** of **Crystal Structure and Impurities**

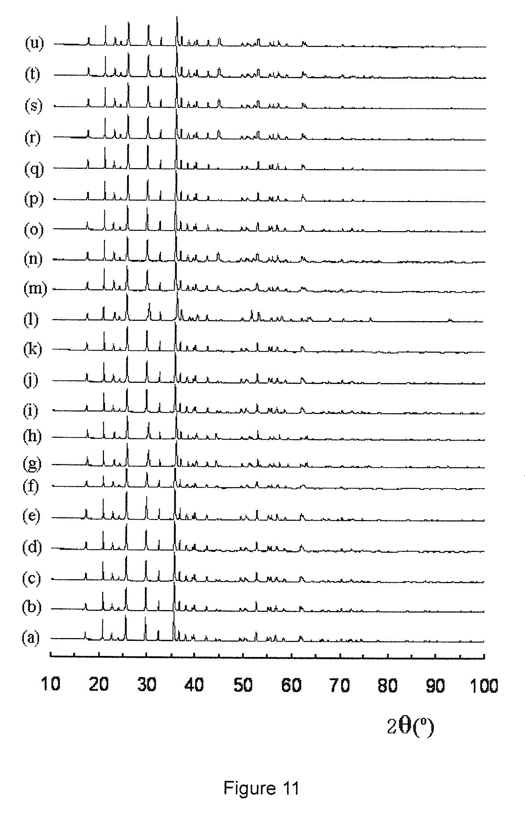

For the investigation of crystal structures, X-ray diffraction patterns were taken of the compounds synthesized in Examples 1 to 21. Plots (a) to (u) in Figure 11 are X-ray diffraction patterns of the compounds of Examples 1 to 21, respectively.

The respective plots in Figure 11 show that the compounds of Examples 1 to 21 have an olivine structure and that the compounds contain no impurities having other different structures than olivine crystal structure.

**Measurement of Anion Vacancies**

By conducting Rietveld refinement of X-ray diffraction patterns, the existence of anion vacancies was confirmed in the non-stoichiometric lithium transition-metal phosphates of the present invention.

Figures 3, 4, 5, 6, 7, 8, 9, and 10 show the results of Rietveld refinement performed on X-ray diffraction patterns of the compounds synthesized in Examples 1, 4, 5, 8, 9, 12, 13 and 14, respectively.

Tables 1, 2, 3, 4, 5, 6, 7, and 8 show the positions of elements in a unit cell identified by carrying out Rietveld refinement and also show the occupancy ratios of Li, Mn, Co, Ni, Fe and P ascertained by modeling crystal structures based on the result of the Rietveld refinement.

In Tables 1 to 8, the reason why the x, y, z coordinates of the constituent elements are different from one another is that due to anion vacancies, attractive and repulsive forces among the constituent elements change according to Coulomb's law, and thereby the crystal structures are deformed.

[Table 1] The result of Rietveld refinement performed on lithium manganese iron phosphate synthesized in Example 1

| Element | x | y | z | Occupancy Ratio |
|---|---|---|---|---|
| Li | 0.00000 | 0.00000 | 0.00000 | 0.8875 |
| Mn | 0.97463 | 0.28200 | 0.25000 | 0.2518 |
| Fe | 0.97463 | 0.28200 | 0.25000 | 0.7482 |

(continued)

| Element | x | y | z | Occupancy Ratio |
|---------|---------|---------|---------|-----------------|
| P | 0.41640 | 0.09448 | 0.25000 | 0.9625 |

[Table 2] The result of Rietveld refinement performed on lithium manganese phosphate synthesized in Example 4

| Element | x | y | z | Occupancy Ratio |
|---------|---------|---------|---------|-----------------|
| Li | 0.00000 | 0.00000 | 0.00000 | 0.9109 |
| Mn | 0.97961 | 0.28178 | 0.25000 | 1.0000 |
| P | 0.41547 | 0.09124 | 0.25000 | 0.9703 |

[Table 3] The result of Rietveld refinement performed on lithium cobalt iron phosphate synthesized in Example 5

| Element | x | y | z | Occupancy Ratio |
|---------|---------|---------|---------|-----------------|
| Li | 0.00000 | 0.00000 | 0.00000 | 0.9055 |
| Co | 0.97900 | 0.27800 | 0.25000 | 0.2537 |
| Fe | 0.97900 | 0.27800 | 0.25000 | 0.7463 |
| P | 0.40700 | 0.08800 | 0.25000 | 0.9685 |

[Table 4] The result of Rietveld refinement performed on lithium cobalt phosphate synthesized in Example 8

| Element | x | y | z | Occupancy Ratio |
|---------|---------|---------|---------|-----------------|
| Li | 0.50000 | 0.50000 | 0.50000 | 0.8962 |
| Co | 0.97840 | 0.27894 | 0.25000 | 1.0000 |
| P | 0.41680 | 0.09490 | 0.25000 | 0.9654 |

[Table 5] The result of Rietveld refinement performed on lithium nickel iron phosphate synthesized in Example 9

| Element | x | y | z | Occupancy Ratio |
|---------|---------|----------|---------|-----------------|
| Li | 0.00000 | 0.00000 | 0.00000 | 0.9109 |
| Ni | 0.97362 | 0.28199 | 0.25000 | 0.2616 |
| Fe | 0.97362 | 0.28199 | 0.25000 | 0.7384 |
| P | 0.41380 | 0.093640 | 0.25000 | 0.9703 |

[Table 6] The result of Rietveld refinement performed on lithium nickel phosphate synthesized in Example 12

| Element | x | y | z | Occupancy Ratio |
|---------|---------|---------|---------|-----------------|
| Li | 0.00000 | 0.00000 | 0.00000 | 0.9325 |
| Ni | 0.98250 | 0.27560 | 0.25000 | 1.0000 |

(continued)

| Element | x | y | z | Occupancy Ratio |
|---------|---|---|---|-----------------|
| P | 0.41670 | 0.09430 | 0.25000 | 0.9775 |

[Table 7] The result of Rietveld refinement performed on lithium manganese cobalt nickel phosphate synthesized in Example 13

| Element | x | y | z | Occupancy Ratio |
|---------|---|---|---|-----------------|
| Li | 0.00000 | 0.00000 | 0.00000 | 0.8916 |
| Mn | 0.97252 | 0.28183 | 0.25000 | 0.3333 |
| Co | 0.97252 | 0.28183 | 0.25000 | 0.3333 |
| Ni | 0.97252 | 0.28183 | 0.25000 | 0.3333 |
| P | 0.41110 | 0.09309 | 0.25000 | 0.9638 |

[Table 8] The result of Rietveld refinement performed on lithium manganese cobalt nickel iron phosphate synthesized in Example 14

| Element | x | y | z | Occupancy Ratio |
|---------|---|---|---|-----------------|
| Li | 0.00000 | 0.00000 | 0.00000 | 0.8962 |
| Mn | 0.97470 | 0.28161 | 0.25000 | 0.2527 |
| Co | 0.97470 | 0.28161 | 0.25000 | 0.2456 |
| Ni | 0.97470 | 0.28161 | 0.25000 | 0.2532 |
| Fe | 0.97470 | 0.28161 | 0.25000 | 0.2485 |
| P | 0.41970 | 0.09474 | 0.25000 | 0.9654 |

The occupancy ratios of the respective elements indicated in Tables 1, 2, 3, 4, 5, 6, 7, and 8 show that the molar ratio of the metal M, i.e., the sum of the molar ratios of the metal elements excluding Li, is 1 while the molar ratio of phosphorus (P) ranges from 0.9625 to 0.9775, which is less than 1. Further, the results of ICP analysis in Examples 2, 3, 6, 7, and 10 to 21 show that the molar ratio of the metal M is 1 whereas the molar ratio of phosphorus (P) ranges from 0.95 to 0.99, which is less than 1. These confirm that the lithium transition-metal phosphates prepared in the working examples of the present invention are anion-deficient compounds. Meanwhile, the results of inductively coupled plasma spectroscopy show that the compounds of Comparative Examples 1 to 14 are stoichiometric compounds, which contain M and P at a molar ratio of 1:1.

**Electrode Resistance and Diffusion Coefficient of Lithium Ions**

Due to anion vacancies, the anion-deficient lithium transition-metal phosphates of the present invention, represented by $Li_{1-x}M(PO_4)_{1-y}$, exhibit superior lithium diffusion coefficients over the stoichiometric lithium transition-metal phosphate $LiMPO_4$. As a result, a battery employing a compound of the present invention achieves a lower electrode resistance.

For the comparison of electrode resistance, potential change and impedance were measured with the GITT (Galvanostatic Intermittent Titration Technique) method on $Li_{0.89}(Mn_{0.25}Fe_{0.75})(PO_4)_{0.96}$ of Example 1 and Li$(Mn_{0.25}Fe_{0.75})PO_4$ of Comparative Example 1, $Li_{0.91}(Co_{0.25}Fe_{0.75})(PO_4)_{0.97}$ of Example 5 and $Li(Co_{0.25}Fe_{0.76})PO_4$ of Comparative Example 5, $Li_{0.91}(Ni_{0.26}Fe_{0.74})(PO_4)_{0.97}$ of Example 9 and $Li(Ni_{0.25}Fe_{0.75})PO_4$ of Comparative Example 9, $Li_{0.89}(Mn_{0.33}Co_{0.33}Ni_{0.33})(PO_4)_{0.96}$ of Example 13 and $Li(Mn_{0.33}Co_{0.33}Ni_{0.33})PO_4$ of Comparative Example 13, and $Li_{0.90}(Mn_{0.25}Co_{0.25}Ni_{0.25}Fe_{0.25})(PO_4)_{0.97}$ of Example 14 and $Li(Mn_{0.25}Co_{0.25}Ni_{0.25}Fe_{0.25})PO_4$ of Comparative Example 14.

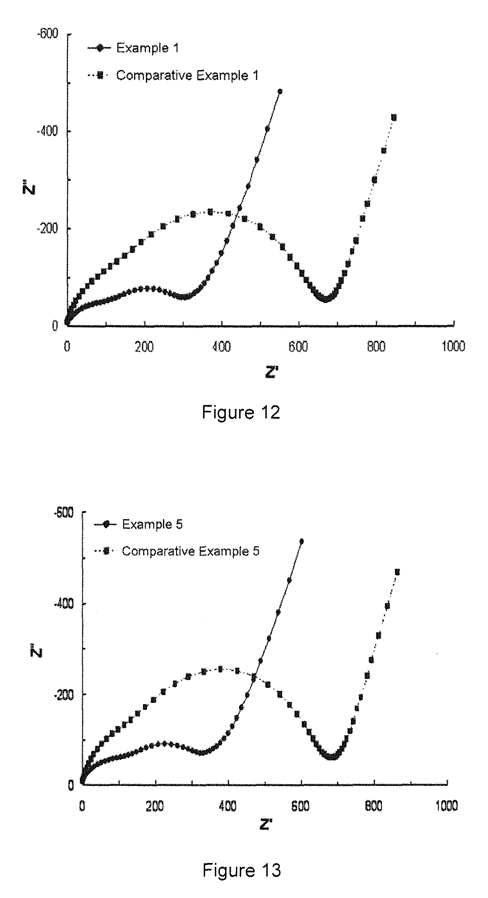

The measured impedances are respectively depicted in Figures 12, 13, 14, 15, and 16. Here, each of Figures 12, 13, 14, 15, and 16 is a Nyquist plot indicating a measured impedance on a complex plane as a function of frequency, wherein Z' and Z" are respectively the real component and the imaginary component of the impedance Z which is a complex number.

Electrode resistance can be calculated based on a measured impedance. A Nyquist plot indicates what types of resistance are involved. From the shapes of the plots in Figures 12 to 16, it is understood that the electrode resistance is comprised of solid electrolyte interface resistance (SEI resistance) and charge transport resistance (CT resistance).

As depicted in Figure 12, the electrode resistance of $Li_{0.89}(Mn_{0.25}Fe_{0.75})(PO_4)_{0.96}$ is 294Ω, which is 2.27 times smaller than that of stoichiometric $Li(Mn_{0.25}Fe_{0.75})PO_4$ having 669Ω.

As depicted in Figure 13, the electrode resistance of $Li_{0.91}(Co_{0.25}Fe_{0.75})(PO_4)_{0.97}$ is 322Ω, which is 2.12 times smaller than that of stoichiometric $Li(Co_{0.25}Fe_{0.75})PO_4$ having 683Ω.

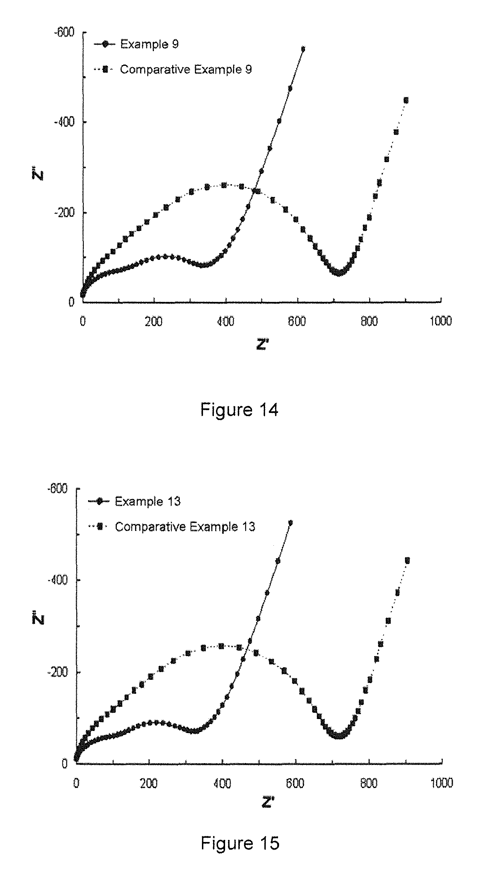

As depicted in Figure 14, the electrode resistance of $Li_{0.91}(Ni_{0.26}Fe_{0.74})(PO_4)_{0.97}$ is 329Ω, which is 2.17 times smaller than that of stoichiometric $Li(Ni_{0.25}Fe_{0.75})PO_4$ having 713Ω.

As depicted in Figure 15, the electrode resistance of $Li_{0.89}(Mn_{0.33}Co_{0.33}Ni_{0.33})(PO_4)_{0.96}$ is 313Q, which is 2.29 times smaller than that of stoichiometric $Li(Mn_{0.33}Co_{0.33}Ni_{0.33})PO_4$ having 717Ω.

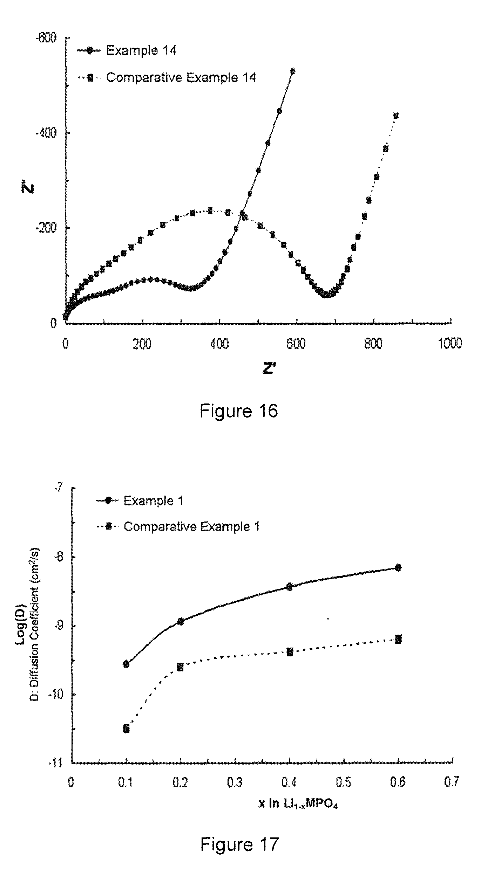

As depicted in Figure 16, the electrode resistance of $Li_{0.90}(Mn_{0.25}Co_{0.25}Ni_{0.25}Fe_{0.25})(PO_4)_{0.97}$ is 315Ω, which is 2.16 times smaller than that of stoichiometric $Li(Mn_{0.25}Co_{0.25}Ni_{0.25}Fe_{0.25})PO_4$ having 679Ω.

From the above comparison of the electrode resistances, it is understood that if a lithium transition-metal phosphate runs short of anions, the electrode resistance decreases by 2.1 to 2.3 times regardless of the molar ratios of the elements constituting the metal M. Such decrease is due to anion vacancies, which are generated as a result of anion deficiency and facilitate lithium ion diffusion, thereby reducing the electrode resistance. The fact that electrode resistance has no correlation with the composition of the metal M means that anion vacancies affect lithium ion diffusion regardless of the composition.

By using the GITT method at various charge/discharge conditions, lithium ion diffusion coefficients were measured on $Li_{0.89}(Mn_{0.25}Fe_{0.75})(PO_4)_{0.96}$ of Example 1 and $Li(Mn_{0.25}Fe_{0.75})PO_4$ of Comparative Example 1, $Li_{0.91}(Co_{0.25}Fe_{0.75})(PO_4)_{0.97}$ of Example 5 and $Li(Co_{0.25}Fe_{0.75})PO_4$ of Comparative Example 5, $Li_{0.91}(Ni_{0.26}Fe_{0.74})(PO_4)_{0.97}$ of Example 9 and $Li(Ni_{0.25}Fe_{0.75})PO_4$ of Comparative Example 9, $Li_{0.89}(Mn_{0.33}Co_{0.33}Ni_{0.33})(PO_4)_{0.96}$ of Example 13 and $Li(Mn_{0.33}Co_{0.33}Ni_{0.33})PO_4$ of Comparative Example 13, and $Li_{0.90}(Mn_{0.25}Co_{0.25}Ni_{0.25}Fe_{0.25})(PO_4)_{0.97}$ of Example 14 and $Li(Mn_{0.25}Co_{0.25}Ni_{0.25}Fe_{0.25})PO_4$ of Comparative Example 14.

Figures 17, 18, 19, 20, and 21 are the measurement results, and show the dependency of lithium ion diffusion coefficient on lithium concentration. In Figures 17 to 21, as the charging of a battery proceeds, the number of lithium ions in an active material decreases and the lithium diffusion coefficient gradually increases. During discharge, an opposite phenomenon occurs inside the active material, i.e. the number of lithium ions gradually increases in the active material and the lithium diffusion coefficient decreases.

As shown in Figure 17, the lithium diffusion coefficient of $Li_{0.89}(Mn_{0.25}Fe_{0.75})(PO_4)_{0.96}$ is $2.784 \times 10^{-10} \sim 7.014 \times 10^{-9} cm^2/s$ depending on charge/discharge conditions, and that of $Li(Mn_{0.25}Fe_{0.75})PO_4$ is $3.187 \times 10^{-11} \sim 6.387 \times 10^{-10} cm^2/s$. From this, it is understood that $Li_{0.89}(Mn_{0.25}Fe_{0.75})(PO_4)_{0.96}$ is about 4.62~10.98 times better than stoichiometric $Li(Mn_{0.25}Fe_{0.75})PO_4$ in lithium diffusion coefficient.

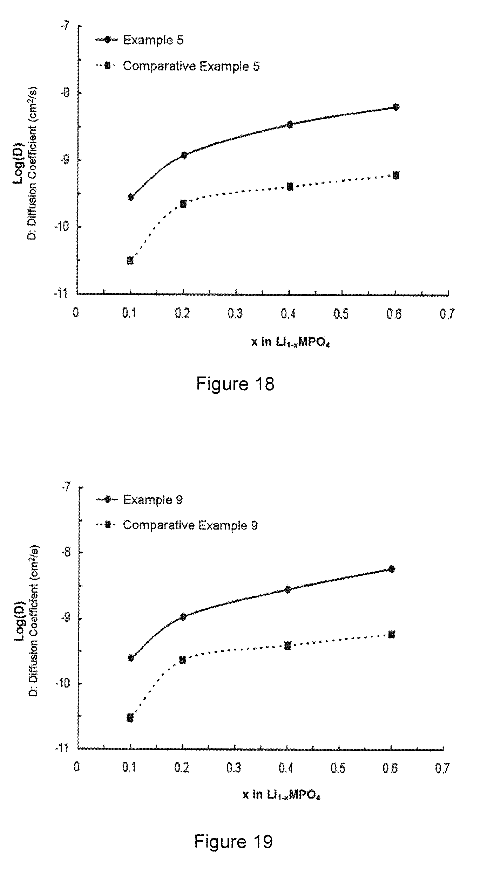

As shown in Figure 18, the lithium diffusion coefficient of $Li_{0.91}(Co_{0.25}Fe_{0.75})(PO_4)_{0.97}$ is $2.832 \times 10^{-10} \sim 6.497 \times 10^{-9} cm^2/s$ depending on charge/discharge conditions, and that of $Li(Co_{0.25}Fe_{0.75})PO_4$ is $3.122 \times 10^{-11} \sim 6.257 \times 10^{-10} cm^2/s$. From this, it is understood that $Li_{0.91}(Co_{0.25}Fe_{0.75})(PO_4)_{0.97}$ is about 5.29~10.38 times better than stoichiometric $Li(Co_{0.25}Fe_{0.75})PO_4$ in lithium diffusion coefficient.

As shown in Figure 19, the lithium diffusion coefficient of $Li_{0.91}(Ni_{0.26}Fe_{0.74})(PO_4)_{0.97}$ is $2.491 \times 10^{-10} \sim 5.877 \times 0^{-9} cm^2/s$ depending on charge/discharge conditions, and that of $Li(Ni_{0.25}Fe_{0.75})PO_4$ is $2.989 \times 10^{-11} \sim 5.990 \times 10^{-10} cm^2/s$. From this, it is understood that $Li_{0.91}(Ni_{0.26}Fe_{0.74})(PO_4)_{0.97}$ is about 4.59~9.81 times better than stoichiometric $Li(Ni_{0.25}Fe_{0.75})PO_4$ in lithium diffusion coefficient.

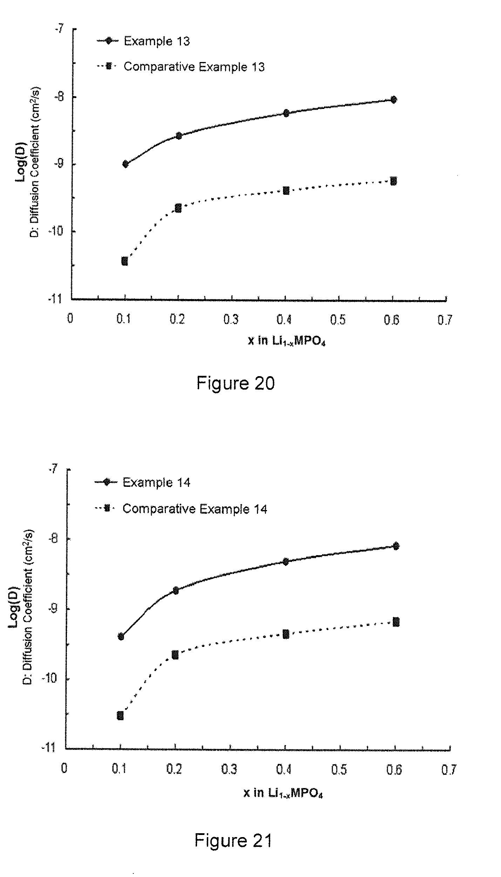

As shown in Figure 20, the lithium diffusion coefficient of $Li_{0.89}(Mn_{0.33}Co_{0.33}Ni_{0.33})(PO_4)_{0.96}$ is $1.008 \times 10^{-9} \sim 9.635 \times 10^{-9} cm^2/s$ depending on charge/discharge conditions, and that of $Li(Mn_{0.33}Co_{0.33}Ni_{0.33})PO_4$ is $3.675 \times 10^{-11} \sim 5.962 \times 10^{-10} cm^2/s$. From this, it is understood that $Li_{0.89}(Mn_{0.33}Co_{0.33}Ni_{0.33})(PO_4)_{0.98}$ is about 12.02~27.43 times better than stoichiometric $Li(Mn_{0.33}Co_{0.33}Ni_{0.33})PO_4$ in lithium diffusion coefficient.

As shown in Figure 21, the lithium diffusion coefficient of $Li_{0.90}(Mn_{0.25}Co_{0.25}Ni_{0.25}Fe_{0.25})(PO_4)_{0.97}$ is $4.140 \times 10^{-10} \sim 8.415 \times 10^{-9} cm^2/s$ depending on charge/discharge conditions, and that of $Li(Mn_{0.25}Co_{0.25}Ni_{0.25}Fe_{0.25})PO_4$ is $2.998 \times 10^{-11} \sim 6.962 \times 10^{-10} cm^2/s$. From this, it is understood that $Li_{0.90}(Mn_{0.25}Co_{0.25}Ni_{0.25}Fe_{0.25})(PO_4)_{0.97}$ is about 8.39~13.81 times better than stoichiometric $Li(Mn_{0.33}Co_{0.33}Ni_{0.33})PO_4$ in lithium diffusion coefficient.

The above comparison of lithium diffusion coefficients confirms that if a lithium transition-metal phosphate runs short of anions, lithium diffusion coefficient increases by up to about 27 times, and that anion vacancies facilitates lithium diffusion.

Table 9 shows lithium ion diffusion coefficients measured with the GITT method on the anion-deficient lithium transition-metal phosphates synthesized in Examples 15, 16, and 17, where all of the measurements were conducted at a 40% state of charge (SOC).

[Table 9] Lithium ion diffusion coefficients of the lithium transition-metal phosphates synthesized in Examples 15, 16, and 17

| | Compound | Lithium Ion Diffusion Coefficient $(cm^2/s)$ |
|---|---|---|
| Example 15 | $Li_{0.88}(Mg_{0.07}Fe_{0.93})(PO_4)_{0.96}$ | $2.315 \times 10^{-9}$ |
| Example 16 | $Li_{0.92}(Mg_{0.10}Mn_{0.90})(PO_4)_{0.97}$ | $2.697 \times 10^{-9}$ |
| Example 17 | $Li_{0.85}(Al_{0.03}Mn_{0.78}Fe_{0.19})(PO_4)_{0.98}$ | $2.214 \times 10^{-9}$ |

From Table 9, it is understood that even anion-deficient lithium transition-metal phosphates containing non-transition metals achieve a lithium diffusion coefficient level of $10^{-9}$ $cm^2/s$. Further, Figures 17 to 21 and Table 9 show that the vacancies formed due to insufficient anions can affect lithium ion diffusion regardless of the composition of the metal M.

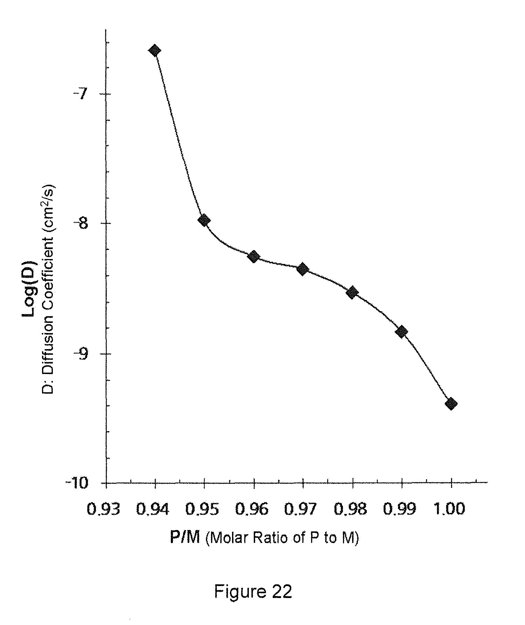

Figure 22 shows the relationship between the molar ratio of phosphorus to the metal M (P/M) and lithium diffusion coefficient. Here, lithium diffusion coefficient was measured with the GITT method on the lithium (manganese cobalt nickel iron) phosphates synthesized in Examples 14, 18, 19, 20 and 21 and Comparative Examples 14 and 15, at 40% SOC. As shown in Figure 22, lithium ion diffusion coefficient can be improved by controlling the molar ratio P/M to be less than 1. When $0.95 \leq P/M \leq 0.99$, the lithium diffusion coefficient is better than when P/M is 1. A more preferable lithium diffusion coefficient is achieved if $0.96 \leq P/M \leq 0.98$. Meanwhile, as the P/M changes from 0.95 to 0.94, the lithium diffusion coefficient greatly changes, which is because anions generated in an excessive amount lead to partial collapse of the crystal structure. Since the collapse of the crystal structure deteriorates electrochemical activity, generating an excessive amount of anion vacancies is not desirable.

## Charge and Discharge Characteristics

The characteristics of lithium secondary batteries employing anion-deficient lithium transition-metal phosphates of the present invention were evaluated as follows:

An electrode slurry which contained an anion-deficient lithium transition-metal phosphate, a conducting agent, and a binder at a weight ratio of 90:5:5 was prepared. In the slurry, the conducting agent was a mixture of super-P® (conductive carbon black produced by TIMCAL Graphite & Carbon, Inc., Switzerland) and vapor-grown carbon fiber (VGCF), wherein the two compounds were contained at the weight ratio of 1:1, and the binder was KF1100® (polyvinylidene fluoride produced by Kureha Chemical Ind. Co., Ltd., Japan).

The electrode slurry was applied onto a thin aluminium sheet at an application speed of 0.3 m/min and was dried at 90˚C in the front room and 120˚C in the rear room of an applicator to fabricate a cathode.

An electrolyte was synthesized by dissolving 1 mol of $LiPF_6$ in a solvent which was a mixture of ethylene carbonate (EC) and ethyl methyl carbonate (EMC) at a volume ratio of 1:2.

A lithium secondary battery of a coin cell type was fabricated. Charge and discharge were conducted at the constant 0.1C rate by using a Maccor series 4000 (Maccor Inc., Tulsa, Oklahoma, U.S.A.).

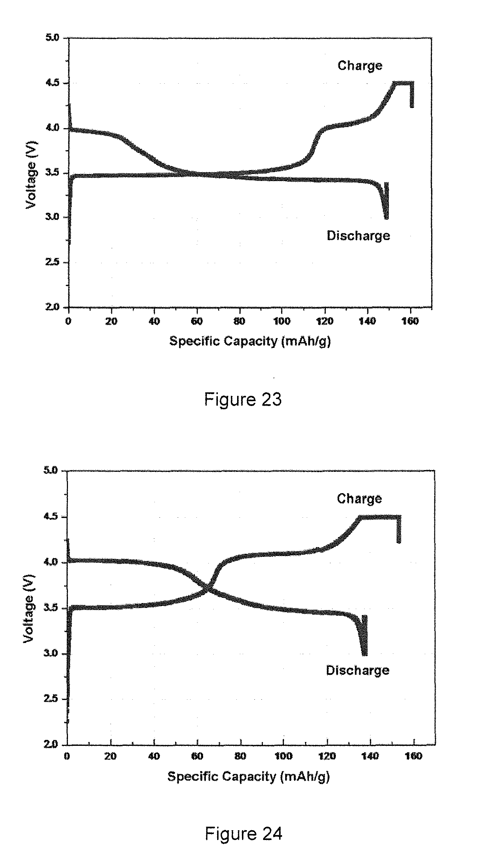

Figures 23, 24, and 25 are the charge/discharge graphs of lithium secondary batteries adopting the anion-deficient lithium manganese iron phosphates synthesized in Examples 1, 2, and 3 as cathode-active materials. When the cutoff potential of discharge was set at 3.0 volt, the anion-deficient lithium manganese iron phosphates of the present invention showed a discharge capacity of 136 to 149mAh/g, which is higher than those of conventional lithium manganese iron phosphates. Further, the gap between the charge potential and the discharge potential was narrow in the compounds of the present invention.

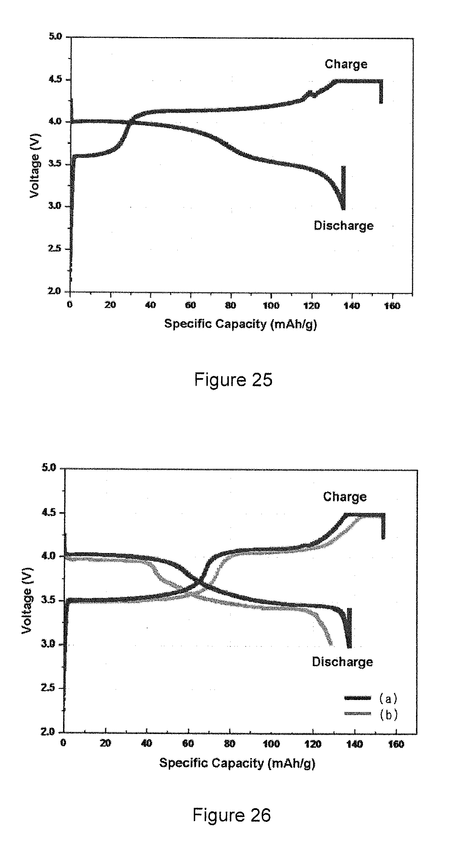

Figure 26 compares the charge/discharge graphs of lithium secondary batteries which adopt the lithium manganese iron phosphates synthesized in Example 2 and Comparative Example 2 as cathode-active materials. The discharge capacity of the anion-deficient lithium manganese iron phosphate of Example 2 is about 138mAh/g, which is greater than 129mAh/g achieved by the stoichiometric lithium manganese iron phosphate of Comparative Example 2.

## [Industrial Applicability]

An anion-deficient lithium transition-metal phosphate of the present invention can be used as an electrode-active material for secondary batteries, memory devices, and capacitors including hybrid capacitors (P-EDLC), and other electrochemical devices, preferably as a cathode-active material for secondary batteries.

**Claims**

1. An electrode-active anion-deficient lithium transition-metal phosphate of the following chemical formula 1

$$Li_{1-x}M(PO_4)_{1-y} \quad (1)$$

wherein $0 \leq x \leq 0.15$, $0 < y \leq 0.05$, and M is represented by the following chemical formula 2,

$$M^A_a M^B_b M^T_t Fe_{1-(a+b+t)} \quad (2)$$

wherein $M^A$ is at least one element selected from the group consisting of the Group 2 elements of the periodic table, $M^B$ is at least one element selected from the group consisting of Group 13 elements of the periodic table, $M^T$ is at least one element selected from the group consisting of Sc, Ti, V, Cr, Mn, Co, Ni, Cu, Zn, Y, Zr, Nb, and Mo, and wherein $0 \leq a < 1$, $0 \leq b < 0.575$, $0 \leq t \leq 1$, $0 \leq (a+b) < 1$, and $0 < (a+b+t) \leq 1$.

2. An anion-deficient lithium transition-metal phosphate of claim 1, wherein $0.015 \leq y \leq 0.05$.

3. An anion-deficient lithium transition-metal phosphate of claim 1, wherein $0.02 \leq y \leq 0.05$.

4. An anion-deficient lithium transition-metal phosphate of claim 1, wherein $0.03 \leq y \leq 0.05$.

5. An anion-deficient lithium transition-metal phosphate of claim 1, wherein $M^A$ is at least one element selected from the group consisting of Mg and Ca, $M^B$ is at least one element selected from the group consisting of B, Al, and Ga, and $M^T$ is at least one element selected from the group consisting of Ti, V, Cr, Mn, Co, Ni, Cu, Zn, Zr, Nb, and Mo.

6. An anion-deficient lithium transition-metal phosphate of claim 1, wherein $M^A$ is Mg, $M^B$ is Al, and $M^T$ is selected from the group consisting of Mn, Co, and Ni.

7. An anion-deficient lithium transition-metal phosphate of claim 1, wherein $0 \leq a \leq 0.30$, and $0 \leq b \leq 0.20$.

8. An anion-deficient lithium transition-metal phosphate of claim 1, wherein $0 \leq a \leq 0.15$, and $0 \leq b \leq 0.10$.

9. An anion-deficient lithium transition-metal phosphate of claim 1, **characterized by** having an olivine crystal structure.

10. A cathode of a secondary battery, comprising an anion-deficient lithium transition-metal phosphate of any one of claims 1 to 9.

11. A secondary battery comprising:

    (a) a cathode comprising an anion-deficient lithium transition-metal phosphate of any one of claims 1 to 9;
    (b) an anode;
    (c) a separator; and
    (d) an electrolyte

12. A method for preparing an electrode-active anion-deficient lithium transition-metal phosphate of the following chemical formula 1:

$$Li_{1-x}M(PO_4)_{1-y} \quad (1)$$

wherein $0 \leq x \leq 0.15$, $0 < y \leq 0.05$, and M is represented by the following chemical formula 2

$$M^A_a M^B_b M^T_t Fe_{1-(a+b+t)} \quad (2)$$

wherein $M^A$ is at least one element selected from the group consisting of the Group 2 elements of the periodic table, $M^B$ is at least one element selected from the group consisting of Group 13 elements of the periodic table, $M^T$ is at least one element selected from the group consisting of Sc, Ti, V, Cr, Mn, Co, Ni, Cu, Zn, Y, Zr, Nb, and Mo, and wherein $0 \le a < 1$, $0 \le b < 0.575$, $0 \le t \le 1$, $0 \le (a+b) < 1$, and $0 < (a+b+t) \le 1$,

said method comprising the following steps:

(a) mixing a precursor of the metal M, a phosphate compound, an alkalinizing agent, and a lithium precursor to prepare a precursor of a lithium transition-metal phosphate;

(b) mixing the precursor of lithium transition-metal phosphate of step (a) with water under reaction conditions of a temperature of $200 \sim 700^\circ C$, and a pressure of $180 \sim 550$ bar to produce an anion-deficient lithium transition-metal phosphate, and drying the thus-obtained compound; and

(c) subjecting the resultant compound of step (b) either to calcination or to granulation and subsequent calcination.

13. A method of claim 12 for preparing an electrode-active anion-deficient lithium transition-metal phosphate, wherein $0.015 \le y \le 0.05$.

14. A method of claim 12 for preparing an electrode-active anion-deficient lithium transition-metal phosphate, wherein $0.02 \le y \le 0.05$.

15. A method of claim 12 for preparing an electrode-active anion-deficient lithium transition-metal phosphate, wherein $0.03 \le y \le 0.05$.

16. A method of claim 12 for preparing an electrode-active anion-deficient lithium transition-metal phosphate, wherein $M^A$ is at least one element selected from the group consisting of Mg and Ca, $M^B$ is at least one element selected from the group consisting of B, Al, and Ga, and $M^T$ is at least one element selected from the group consisting of Ti, V, Cr, Mn, Co, Ni, Cu, Zn, Zr, Nb, and Mo.

17. A method of claim 12 for preparing an electrode-active anion-deficient lithium transition-metal phosphate, wherein $M^A$ is Mg, $M^B$ is Al, and $M^T$ is at least one element selected from the group consisting of Mn, Co, and Ni.

18. A method of claim 12 for preparing an electrode-active anion-deficient lithium transition-metal phosphate, wherein $0 \le a \le 0.30$, and $0 \le b \le 0.20$.

19. A method of claim 12 for preparing an electrode-active anion-deficient lithium transition-metal phosphate, wherein $0 \le a \le 0.15$, and $0 \le b \le 0.10$.

20. A method of claim 12 for preparing an electrode-active anion-deficient lithium transition-metal phosphate which is **characterized by** having an olivine crystal structure.

21. A method of claim 12 for preparing an electrode-active anion-deficient lithium transition-metal phosphate, wherein the pH of the reaction conditions in step (b) is greater than 4.0 and equal to or less than 12.0.

22. A method of claim 12 for preparing an electrode-active anion-deficient lithium transition-metal phosphate, wherein the average size of the primary particles of anion-deficient lithium transition-metal phosphate prepared in step (b) is 0.01 $\mu$m to 5$\mu$m.

23. A method of claim 12 for preparing an electrode-active anion-deficient lithium transition-metal phosphate, **characterized in** adding at least one reducing agent selected from the group consisting of hydrazine, sodium phosphate, sodium sulfite, sodium nitrite, potassium iodide, sucrose, fructose, oxalic acid, ascorbic acid, hydrogen, carbon, and hydrocarbon, before, after, or during at least one of steps (a), (b), and (c).

24. A method of claim 12 for preparing an electrode-active anion-deficient lithium transition-metal phosphate, **characterized in** adding at least one carbon precursor selected from the group consisting of graphite, sucrose, fructose, oxalic acid, ascorbic acid, starch, cellulose, polyvinyl alcohol (PVA), and polyethylene glycol (PEG), before, after, or during at least one of steps (a), (b), and (c).

Figure 1

Figure 2

x-axis 2θ [°]
y-axis Intensity [abs. unit]

● observed intensity
—— calculated intensity
········ background

Difference (obs. - calc.)

Figure 3

x-axis 2θ [°]
y-axis Intensity [abs. unit]

● observed intensity
—— calculated intensity
········ background

Difference (obs. - calc.)

Figure 4

Figure 5

Figure 6

Figure 7

Figure 8

Figure 9

Figure 10

Figure 11

Figure 12

Figure 13

Figure 14

Figure 15

Figure 16

Figure 17

Figure 18

Figure 19

Figure 20

Figure 21

Figure 22

Figure 23

Figure 24

Figure 25

Figure 26

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20090005540
- EP 1094532 A
- EP 1094533 A
- KR 20010025117
- US 20060263286 A1
- JP 2006131485 A
- US 20070207080 A1
- WO 2003077335 A
- KR 20040094762